# EUROPEAN PATENT SPECIFICATION

(11) **EP 4 388 161 B1**
(45) Date of publication and mention of the grant of the patent: **22.10.2025**
(21) Application number: 22764719.5
(22) Date of filing: 11.08.2022
(51) Int. Cl.: E04D 13/03, E06B 3/22

(54) **ROOF WINDOW FRAME COMPRISING REINFORCEMENT PROFILE WITH TEMPERATURE MANAGEMENT FUNCTIONALITY**
DACHFENSTERRAHMEN MIT VERSTÄRKUNGSPROFIL MIT TEMPERATURMANAGEMENTFUNKTIONALITÄT
CADRE DE FENÊTRE DE TOIT COMPRENANT UN PROFILÉ DE RENFORCEMENT AYANT UNE FONCTIONNALITÉ DE GESTION DE TEMPÉRATURE

(30) Priority: 17.08.2021 DK PA202170411
(43) Date of publication of application: 26.06.2024
(73) Proprietor: VKR Holding A/S, 2970 Hørsholm (DK)
(72) Inventor: TØNNING, Peter Jean Claude Gadgaard, 2970 Hørsholm (DK); SIMON, Johnsen, 2970 Hørsholm (DK)
(74) Representative: Høiberg P/S
(86) International application number: PCT/EP2022/072516
(87) International publication number: WO 2023/020925

(56) References cited:
- EP-A1- 1 510 631
- EP-A2- 2 426 303
- DE-A1- 4 446 412
- US-B1- 6 427 415

## Description

The present disclosure relates to a roof window, and a building comprising one or more roof windows.

### Background

Manufacturing of windows for buildings has been the subject of development over many years where one of the major development goals has been to increase the insulation properties of the window. This has among others been achieved by developing window panes with improved heat insulation properties by e.g. providing panes comprising multiple glass sheets spaced apart by insulating gaps, such as gaps comprising an inert gas. Other solutions comprise providing a vacuum insulated glass unit where one or more evacuated gaps are placed between glass sheets of the pane. Additionally, the window frame has been subject to development in order to increase the insulation properties of the frame. Frame profiles with various insulating cavities inside the frame profile, separated by partition walls, have been developed in order to increase the heat insulating properties of the frame. Additionally, also different kinds of insulation material have been provided into such gaps in order to enhance the heat insulation properties of the frame further.

It is generally known to provide improved structural stability/strength of a window frame by means of a metal insert that may be provided in the frame interior. Patent document US6427415 B1 discloses a heat conducting insert that is provided to extend along an interior frame profile surface at a room side to conduct room heat to an edge of a window pane. Even though this may provide some degree of heat management with regard to reduction of condensation issues, it still may suffer from drawbacks.

The present disclosure may provide an improved roof window solution that may help to enable an extended life time of the window and/or a roof window solution that may be less sensitive to the geographical condition where the window is installed. Additionally or alternatively, the present disclosure may provide a solution that help to enable a selection of a wider range of suitable frame profile materials and/or designs.

### Summary

The present disclosure relates to a roof window according to a first aspect. The roof window comprises a frame supporting a glass unit comprising an first outer major surface for facing the interior of a building, and a second outer major surface for facing away from the interior of a building when the window is installed in an aperture of a building. The frame comprises a plurality of frame profiles having a longitudinal direction arranged to extend parallel to a side surface of the glass unit, and the frame profiles together define a frame opening. One or more of said frame profiles are hollow and comprises an interior frame profile space enclosed by exterior frame profile walls. A frame reinforcement profile is arranged in the interior frame profile space, and the thermal conductivity coefficient of the material of the reinforcement profile is higher than the thermal conductivity coefficient of the material of the exterior frame walls. The frame reinforcement profile) has a reinforcement profile length extending substantially parallel to the longitudinal direction of the frame profile.

The reinforcement profile comprises a wall part extending in a direction away from a first region located proximate a first plane comprising the first outer major surface of the glass unit, and moreover extends in the interior frame profile space in a direction away from a second plane, so that the interior space is split into a first space part located at a first side of the reinforcement profile, and a second space part located at a second side of the reinforcement profile. The second plane is perpendicular to the first plane, extends parallel to the longitudinal direction of the frame profile, and touches a part of an exterior surface of a first exterior wall of the frame profile that faces and is proximate the frame opening.

The arrangement of the reinforcement profile provides improved heat/temperature management. The reinforcement profile enables both a heating function for heating the frame profile near the glass unit to prevent condensation issues at edge parts of the glass unit and/or the frame when it is cold outside the building where the window is installed. Furthermore the inventors have found that the reinforcement profile may help to provide or improve transportation of heat away from the first exterior wall that faces and is proximate the frame opening when higher temperatures are provided outside the building. The latter may e.g. be advantageous when the temperature outside the building is higher than the general temperature in the room to which the roof window provides sunlight through the glass unit, and/or in sunny conditions.

In some situations where an interior cover such as a blind or additional glass is installed at the roof window, simulations and "real life test" have shown that the temperature of the first exterior wall may get above 90°C, and even above 100°C in case the reinforcement profile is omitted. Computer simulations however indicates an improved heat management at the first exterior wall in case the reinforcement profile according to the present disclosure is installed, so that the temperature at the first frame wall is reduced. This also applies when compared to simulations where a major surface of a reinforcement profile is installed to abut and extend along a frame wall.

In some cases, high temperatures have shown to damage the frame wall material, such as a polymer. By providing a transportation of heat away from the said first exterior wall by means of the reinforcement profile,, this may provide e.g. one or more advantages such as helping to extend the life time of the frame, help to enable a selection of a wider range of frame profile materials and/or designs, and/or help to spare edge seal constructions of the glass unit. By providing the reinforcement profile, the temperature may be reduced at the frame.

Also, it may help to provide a more resistant solution that may be able to be installed in a larger span of geographical areas, as the frame construction may be less sensitive to higher temperatures.

The frame opening, such as a rectangular frame opening, is an opening through which light, such as sunlight, can enter. For example, sunlight may pass through the frame opening and through the glass unit (that may be arranged to cover the frame opening), and hereby the sunlight enters into the interior of the building at which the roof window is installed. Additionally, light may enter through the glass unit and frame opening from the interior of the building and to the exterior of the building.

In one or more embodiments of the present disclosure, the reinforcement profile wall part may extend between the first exterior wall and another exterior frame profile wall of the frame profile.

This may help to provide an improved transportation of heat in both the case where heat is transported to a location proximate the glass unit to prevent or reduce dew/condensation issues, and in the case where the heat is configured to be transported away from the first wall to reduce the temperature of the first wall.

For example, in some embodiments of the present disclosure, the reinforcement profile wall part may extend between the first exterior wall and another exterior frame profile wall to an opposing corner portion of the frame profile through the interior space.

In embodiments of the present disclosure, said other/another exterior frame profile wall may comprise an exterior wall configured to face the interior of the building. Additionally or alternatively, in embodiments of the present disclosure, said other/another exterior frame profile wall may comprise an exterior wall comprising an exterior surface facing away from the frame opening.

Such exterior frame walls may in roof windows comprise areas/zones that may be rather hot when it is colder outside, hence providing improved transfer of heat towards the first exterior wall. When it gets hot outside compared to the general temperature in the room of the building, the same areas/zones may appear to be relatively cool compared to the first wall. Accordingly, here, heat may be transported away from the first exterior wall and towards the other wall that will in the latter case be the colder one.

In some embodiments of the present disclosure, the said opposing corner portion may be in an area where these two exterior walls, i.e. an exterior wall configured to face the interior of the building and an exterior wall comprising an exterior surface facing away from the frame opening, meet.

In one or more embodiments of the present disclosure, the wall part of the reinforcement profile extends in the interior frame profile space in a direction away from the first region located proximate the first plane, and in the direction away from the second plane towards an exterior frame profile wall comprising an exterior surface facing away from the frame opening and facing away from the interior space.

In one or more embodiments of the present disclosure, the reinforcement profile extends into the interior frame profile space from an exterior frame profile wall that faces an overlapping part of the glass unit.

In some embodiments, the reinforcement profile may extend into the interior frame profile space from an exterior frame profile wall that faces the first outer major surface of the glass unit.

In one or more embodiments of the present disclosure, the reinforcement profile may extend from a corner proximate the glass unit or a wall proximate the glass unit comprising an outer wall surface facing a part of the outer surface of the glass unit.

In one or more embodiments of the present disclosure, the frame reinforcement profile, such as a second reinforcement profile edge, may abut the other exterior frame profile wall or a component thereof.

This may help to provide improved heat transfer and/or reinforcement of the frame profile. The mentioned "component thereof" may e.g. comprise a holding part extending from the interior surface of the first wall, or a recessed portion, provided in order to provide a holding function of the reinforcement profile.

In one or more embodiments of the present disclosure, said glass unit glass may comprise an insulated glass unit such as a multi-glass-sheet unit comprising one or more heat insulating cavities located between major surfaces of glass sheets of the insulated glass unit.

Such glass sheets provides good heat insulation. However, these may provide condensation issues when it is e.g. colder outside than in the interior of the building, which condensation issues the reinforcement profile however may reduce.

In one or more embodiments of the present disclosure, the reinforcement profile wall part extends parallel to, or with an acute angle to, a diagonal plane extending between opposing corner portions, such as wherein one of said corner portions is placed opposite to and proximate the first outer major surface of the glass unit.

This may provide a good temperature management in roof windows both in scenarios where the temperature outside a building is hotter than the general internal ambient room temperature, and in in scenarios where the temperature outside a building is colder (such as below 0°C) than the general internal ambient room temperature.

Said acute angle between the diagonal plane and the reinforcement profile wall may in some embodiments be less than ± 30°, such as less than ±20° such as less than ±12° or less than ±6° relative to the diagonal plane.

The reinforcement profile may hence be configured to be diagonally oriented between diagonally arranged corners according to diagonal plane extending through the diagonally arranged corners.

The said wall part of the reinforcement profile providing the dividing of the interior frame space into the first and second space may e.g. comprise a substantially plane wall surface, but in other embodiments, it may be a curved surface.

In one or more embodiments of the present disclosure, the frame reinforcement profile, such as a first reinforcement profile edge, may abut the first exterior wall and/or a component thereof. This may help to provide improved heat transfer to and from the first wall.

It is generally understood that the frame reinforcement profile may have a material thickness that is less that the length and width of the reinforcement profile. The thickness may e.g. be defined between outer major surfaces of the reinforcement profile that faces each their space part of the interior space. These outer major surfaces may be defined between ends of the reinforcement profile and first and second edges of the reinforcement profile between which the reinforcement profile width is defined.

In one or more embodiments of the present disclosure, the frame reinforcement profile wall part may extend into the interior space from a position at the first exterior wall, where said position is placed between a first proximate corner portion of the frame profile that is located proximate the first outer major surface of the glass unit, and a distal corner portion of the frame profile providing a transition from the first exterior wall to a second exterior wall of the frame profile, such as with a distance from said first proximate corner portion and said distal corner portion.

This may help to provided improved heating and/or cooling in advantageous areas in a roof window. Computer Simulation results have indicated that parts of the first exterior frame wall between these corners may get especially hot when the temperature rises outside the building to a level above the room temperature in the building, and an interior cover, such as a blind, is placed/arranged in a covering position opposite to the first outer major surface of the glass unit.

In one or more embodiments of the present disclosure, the reinforcement profile may comprise or be made from a metal such as steel or aluminium. In some embodiments, the metal may be ferromagnetic. Such material may help to both provide good mechanical strength and a good heat conduction and so to say an intended "cold bridge" in the space of the frame profile.

In one or more embodiments of the present disclosure, the thermal conductivity coefficient of the material of the reinforcement profile may be at least 5 times, such as at least 10 times, such as at least 50 times larger than the thermal conductivity coefficient of the material of the exterior frame walls.

In some embodiments of the present disclosure, the increased thermal conductivity of the reinforcement profile may be achieved by introducing a larger fibre content such as glass fibre content in the reinforcement profile when compared to the fibre content in the outer walls of the profile the thermal conductivity coefficient of the material of the reinforcement profile.

In one or more embodiments of the present disclosure, the reinforcement profile may be integrated in/unitary with the outer walls of the frame profile.

In one or more embodiments of the present disclosure, the thermal conductivity coefficient of the material of the reinforcement profile is at least 7 W/(m·K), such as at least 10 W/(m·K), such as at least 18 W/(m·K), for example at least 45 W/(m·K) at a temperature of 20°C,

In one or more embodiments of the present disclosure, the thermal conductivity coefficient of the material of the reinforcement profile may be less than 100 W/(m·K), such as less than 50 W/(m·K), such as less than 25 W/(m·K) at a temperature of 20°C.

In one or more embodiments of the present disclosure, the thermal conductivity coefficient of the material of the exterior walls of the frame profile is less than 2 W/(m·K), such as less than 1 W/(m·K), for example less than 0.5 W/(m·K), for example less than 0.2 W/(m·K) at a temperature of 20°C,
In one or more embodiments of the present disclosure, the reinforcement profile may comprise or consist of a plate shaped element, such as comprises a substantially plane plate shaped element, wherein the plate shaped element comprising a first major surface facing towards the first space part, and a second major surface facing towards the second space part.

In other embodiments, the reinforcement profile wall part extending through the interior space may be substantially plane.

In embodiments of the present disclosure, the reinforcement profile, such as the profile wall part extending through the interior space, may comprise or consist of a non-plane element, such as an element describing a curved shape, a V-shape, a Z-shape or the like when seen through a cross sectional view of the reinforcement profile extending in a direction perpendicular to the longitudinal direction of the reinforcement profile.

In one or more embodiments of the present disclosure, the reinforcement profile wall may extend from at least one corner portion of the frame profile where two converging, exterior frame profile walls meet.

In one or more embodiments of the present disclosure, the reinforcement profile wall part may extend with an angle from said first plane that is less than 75° such as less than 60°, such as less than 45°.

In one or more embodiments of the present disclosure, the reinforcement profile wall part, such as substantially the entire reinforcement profile wall part, may be placed at the side of the first plane that faces away from the first outer major surface.

In one or more embodiments of the present disclosure, a part of the interior cavity, and a part of the frame reinforcement profile, may be placed opposite to the first exterior major surface of the glass unit.

A frame provided by such a profile may provide improved heat insulation in a roof window as the first exterior major surface overlaps the frame. Among others, it may reduce condensation issues near the edges of the glass unit and/or at the frame profile. Providing a frame reinforcement profile according to embodiments of the present disclosure so that a part of the frame reinforcement profile/reinforcement profile is placed opposite to the first exterior major surface of the glass unit may help to provide improved heat management during changing temperature conditions.

In one or more embodiments of the present disclosure, a part of the interior cavity, and a part of the frame reinforcement profile may extend from a position opposite to the first exterior major surface of the glass unit

In one or more embodiments of the present disclosure, a part of the interior cavity, and a part of the frame reinforcement profile may extend from a position opposite to the first exterior major surface of the glass unit, and through an edge plane comprising said side surface of the glass unit. Said edge plane may in some embodiments extend perpendicular to the first plane.

Such a frame profile solution may help to provide improved heat insulation and heat management.

In one or more embodiments of the present disclosure, said interior space may extend to a position opposite the side surface of the glass unit, such as where the interior space is enclosed by a plurality of the exterior walls.

Such a frame profile solution may help to provide improved heat insulation and heat management. It is understood that one of the first space part second space part, such as the first space part, in embodiments may comprise the part that may extend to the position opposite the side edge of the glass unit whereas the other space part may only extend at the other side of the reinforcement profile, and not penetrate the first plane.

In one or more embodiments of the present disclosure, the frame reinforcement profile extends in a direction away from the side of the first plane that will face the interior of the building when the window (is installed in a roof structure of the building.

In one or more embodiments of the present disclosure, the roof window comprises a cover connection system, such as comprising one or more pre-installed brackets or recesses, for mounting of a cover such as a blind.

Even though the window is not necessarily initially supplied with a cover, there is a chance that the end user may install a cover themselves, either by providing an architectural cover such as a blind specifically designed for the window, or a third party cover solution. The window manufacturer may have an increased chance of assuring the lifetime of the window due to the improved heat management provided by means of the reinforcement profile.

In one or more embodiments of the present disclosure, substantially the entire reinforcement profile wall may be configured to be placed below the first plane at the side of the plane facing the building interior when the window is installed in a roof structure of the building.

In one or more embodiments of the present disclosure, the roof window comprises a cover, such as one of a blind, a roller blind or a pleated blind. Said cover comprises a covering material which is configured to be displaced to a covering position located opposite the first exterior major surface of the glass unit so as to reduce the amount of sunlight entering through the glass unit and into the building, and wherein a space is provided between the first exterior major surface and the covering material when the covering material is in a covering position.

In one or more embodiments of the present disclosure, a frame arrangement comprises said frame, and wherein the frame arrangement moreover comprises a stationary frame to which the frame is movably connected by means of a hinge arrangement.

The frame may in some embodiments be referred to as a sash. Hence, the frame arrangement may comprise the stationary frame and said sash. The frame reinforcement profile may be arranged in said frame or said stationary frame, or both.

In one or more embodiments of the present disclosure, the frame is of the centre hung type so that the frame is configured to pivot relative to the stationary frame around a pivot axis placed between ends of side profiles of the frame, and where the pivot axis extends perpendicular to side profiles of the frame, and substantially parallel to top and bottom profiles of the frame.

In one or more embodiments of the present disclosure, the stationary frame comprises frame profiles, such as hollow frame profiles, extending parallel to said one or more frame profiles comprising the interior frame profile space, and wherein at least a part of said stationary frame profile(s) is configured to overlap an exterior surface of the frame profile facing away from the frame opening.

In one or more embodiments of the present disclosure, the stationary frame may be configured to extend to a level below an outer major surface of a roof construction of a building when installed in the building, such as wherein at least 30%, such as at least 50% of the height of the stationary frame and/or height of the frame/sash when the frame/sash is in a closed position, is configured to be located at a level below the outer major surface of a roof construction when the window is installed in the building.

In one or more embodiments of the present disclosure, the movable frame may be configured to extend below an outer major surface of a IGU (insulating glass unit), such as wherein at least 50%, such as at least 60% of the height of the movable frame and/or height of the frame/sash when the frame/sash is in a closed position, is located at a level below the outer major surface of a IGU.

In one or more embodiments of the present disclosure, the exterior frame profile walls may be made from or comprises a polymer. In some embodiments of the present disclosure, said polymer may comprise PVC, C-PVC Polypropylene (PP), polyethylene terephthalate or Polyurethane.

In some embodiments of the present disclosure, the frame profile walls may comprise Propylene, PVC, C-PVC (Chlorinated polyvinyl chloride), PP polypropylene, PA6 Polyamide, PET (polyethylene terephthalate) or Polyurethane. The exterior frame profile walls may in further embodiment be provided with fibres embedded therein for improved strength. In some embodiments, the frame wall may comprise fibre composites of one or more of the above mentioned polymers.

In one or more embodiments of the present disclosure, the frame profiles of the stationary frame and/or the frame profiles comprising the interior space where the reinforcement profile is to be arranged, may be extruded or pultruded profiles.

In one or more embodiments of the present disclosure, the interior frame profile space may comprise one or more spaces, such as one or both of said first and second space parts that is/are filled with an insulation material.

The insulation material may e.g. be a foamed polymer such as polystyrene, a polyurethane insulation material, a polypropylene insulation material and/or PET insulation material; In other embodiments, the insulation material may comprise a natural fibre material such comprising wood fibres, e.g. loose wood fibre insulation material.

In some embodiments of the present disclosure, the frame profile may comprise a plurality of integrated spaces/cavities divided by partition walls that are integrated in the frame profile and comprising or consisting of the same material as the exterior frame walls. Some of these may be left empty (i.e. filled with air) while others may be filled with an insulation material. In some embodiments, all such integrated cavities may be left empty or filled with an insulation material.

In one or more embodiments of the present disclosure, the interior frame profile space may comprise at least one partition wall, such as a plurality of partition walls, integrated in the frame profile construction and extending into and/or through the interior frame profile space, thereby providing a plurality of integrated spaces/cavities in the interior frame profile space.

Hereby, the interior frame profile space is divided into one or a plurality of heat insulating cavities by means of the partition wall(s) integrated in the frame profile, such as provided in a polymer material and/or the same material as the exterior frame walls.

The partition walls provides a plurality of cavities and may improve heat insulation performance of the frame. The partition walls may e.g. be pultruded and/or extruded together with the remaining frame profile comprising the exterior frame profile walls.

In other embodiments of the present disclosure, the frame reinforcement profile in the interior frame profile space may be substantially the only component providing a division of the interior frame profile space into space parts, and partition walls integrated in the interior frame profile space may hence be omitted.

In one or more embodiments of the present disclosure, the frame profile may comprises one or more holding parts extending from one or more exterior frame walls, wherein said reinforcement profile is maintained in a reinforcement position by means of said holding parts, such as by being wedged in the interior frame profile space by means of said one or more holding parts. The holding part/parts may be integrated in the frame profile wall material as protrusions and/or recesses.

In some embodiments of the present disclosure, the reinforcement profile may be configured to be slid/displaced into and/or out of the interior frame profile space in the longitudinal direction of the frame profile.

Sliding/displacing the reinforcement profile out of the interior frame profile space may in some embodiments be provided/allowed without needing to first remove or release holding mechanisms such as screws, pop rivets or the like. The said holding parts may hence instead provide a track or tracks for receiving and holding the reinforcement profile. This may e.g. be advantageous during manufacturing the roof window and/or when the window is scrapped and materials hereof should be recycled.

In one or more embodiments of the present disclosure, the reinforcement profile is arranged to transfer thermal energy by thermal conduction between opposing corner portions of the frame profile, such as between diagonally arranged corner portions, and wherein the reinforcement profile is further arranged to substantially not transfer thermal energy by thermal conduction between a distal frame corner portion and the opposing corner portions.

**In** one or more embodiments of the present disclosure, the reinforcement profile may be arranged to transfer an increased amount of thermal energy by thermal conduction between opposing corner portions such as diagonally arranged corner portions, of the exterior frame wall of the frame profile, when compared to the amount of thermal energy transported by the reinforcement profile between one or both of said opposing corner portion and a distal, intermediate corner portion of the exterior frame wall between said opposing corner portions.

In one or more embodiments of the present disclosure, the frame reinforcement profile may abut a first exterior wall, a component thereof or a corner. Additionally or alternatively, in one or more embodiments of the present disclosure, the frame reinforcement profile may comprise a reinforcement profile edge that abut another exterior frame profile wall of the frame profile or a component thereof, such as proximate a corner portion or at a corner portion.

In one or more embodiments of the present disclosure, the roof window may be configured to be installed in a the roof structure of a building having a roof pitch angle relative to horizontal which is above 17°, such as between 17° and 85°, such as between 25° and 75°.

The present disclosure additionally relates, in a further aspect, to a roof window for installation in a roof structure of a building to cover a building aperture at a room of the building, wherein the roof window comprises a frame and a glass unit comprising an first outer major surface for facing the room, and a second outer major surface for facing away from the room when the window is installed in an aperture of a building. The frame comprises a plurality of frame profiles having a longitudinal direction arranged to extend substantially parallel to a side surface of the glass unit, and where the frame profiles together defines a frame opening through which light can enter. One or more of said frame profiles is hollow and comprises an interior frame profile space enclosed by exterior frame profile walls. A frame reinforcement profile is arranged in the interior frame profile space, and the thermal conductivity coefficient of the material of the reinforcement profile is higher than the thermal conductivity coefficient of the material of the exterior frame walls. The frame reinforcement profile has a reinforcement profile length extending substantially parallel to the longitudinal direction of the frame profile. The reinforcement profile comprises a wall arranged to extend away from a first region located proximate a first plane defined by an outer major surface of the insulated glass unit, and in a direction so that a first isotherm group comprising a plurality of first isotherms is crossed in said interior frame profile space, wherein the isotherms of the first isotherm group are defined at a cross sectional view of the frame profile extending perpendicular to the longitudinal direction of the frame profile in a scenario where the reinforcement profile is omitted and in a first temperature condition (T1 < T2) where the general ambient air temperature (T1) in the room is lower than the temperature (T2) at the second outer major surface of the insulated glass unit, and wherein neighbouring isotherms of the first isotherm group have a temperature difference of 1°C, 3°C, or 5°C.

Usually, crossing isotherms with thermal bridges such as metal parts is avoided because it results in reduced heat insulation. However the present inventors have discovered that controlled crossing of isotherms may provide a benefit in roof windows both in cold weather and hot weather situations.

For example, by crossing isotherms by means of a reinforcement profile as previously explained, in a condition where a cover material of a cover such as a blind at the window is closed/in a covering position, the reinforcement profile may help to hence cool a heated space between the blind and the window glass unit

In some embodiments of the present disclosure, the general ambient air temperature in the room may in the first temperature condition be at least 10°C, such as at least 20°C lower than the temperature at the second outer major surface of the insulated glass unit. This may e.g. e.g. occur in case the outside temperature is above 35-40°C, such as e.g. about 45°C, and the room temperature is set to e.g. 20°C. This may occur during summer or in the spring or autumn in some situations and/or in conditions where air conditioning is used/provided in the room. Naturally it is understood that the temperature conditions may vary over the year in different ways dependent on the geographical location where the roof window is installed.

In one or more embodiments of the further aspect, said first isotherm group represents a temperature difference of at least 20°C, such as at least 40°C, such as at least 55°C, such as wherein said temperature difference is obtained in a scenario (T2>T1) where the maximum temperature at the second outer major surface of the glass unit is above 40°C such as around 45°C and the general ambient air temperature in the room is, such as is set to be, substantially 20°C.

This may provide enhanced cooling of an exterior frame wall that may be heated due to e.g. the presence of a cover in a covering position.

The first isotherm group may comprise between 2 and 20, such as between 4 and 15, such as between 5 and 14 of said isotherms where wherein neighbouring isotherms of the first isotherm group have a temperature difference of 1°C, 3°C, or 5°C, for example 3°C or 5°C. As a specific example the neighbouring isotherms of the first isotherm group may have a have a temperature difference of 5°C, and the first isotherm group may comprise at least four, such as at least seven isotherms, e.g. between 6 and 15 isotherms that are crossed by the reinforcement profile wall in the interior frame profile space.

In one or more further embodiments of the further aspect, the reinforcement profile may moreover be arranged to extend so that less isotherms of a second isotherm group comprising a plurality of second isotherms are crossed than the number of isotherms crossed at the first temperature condition, wherein the isotherms of the second isotherm group are defined at said cross sectional view of the frame profile extending perpendicular to the longitudinal direction of the frame profile in a scenario where the reinforcement profile is omitted, and in a second temperature condition T1 > T2 where the general ambient air temperature T1 in the room of the building is higher than the temperature T2 at the second outer major surface of the insulated glass unit, where neighbouring isotherms of the second isotherm group have a temperature difference corresponding to the temperature difference of neighbouring isotherms of the first isotherm group.

In some embodiments of the further aspect, the general ambient air temperature in the room of the building receiving sunlight through the window may in the second temperature condition be, such as be set to be, at least 10°C, such as at least 20°C higher than the temperature at the second outer major surface of the insulated glass unit.

This may e.g. be provided in case the outside temperature is below 0°C, such as e.g. about -5°C, and the room temperature is set to e.g. 20°C. This may occur during winter or in the spring or autumn in some situations.

It is generally understood that the room temperature may be controlled by a heating and/or cooling system, such as a combination thereof, to allow human users to obtain a desired temperature inside the room during both summer and winter. This may e.g. be obtained by a "heating, ventilation, and air conditioning (HVAC)" system.

The temperature of the first exterior surface facing the building interior may have a maximum temperature above 90°C such as above 100°C during said first temperature condition. This may be provided due to a heating of a space between the frame profiles in the frame opening, e.g. as a consequence of higher outer temperatures (e.g. above 30°C at the outside of the building), and e.g. also due to that a covering at the window such as a blind is placed in a covering position to reduce the amount of sunlight entering the room, as this may reduce air from the room to enter the said space and cool it. Said space may hence be enclosed by the covering, the first exterior surface of the insulated glass unit, and side walls of frame profiles facing the frame opening. This space may in roof windows become very hot when temperatures rises outside.

In one or more embodiments of the present disclosure, a cover such as a blind is arranged in a covering position opposite to the first outer major surface and with a distance thereto.

It is generally understood that the roof window according to the further aspect in one or more embodiments of the present disclosure may comprise one or more of the features of the roof window according to the above mentioned first aspect, and/or may comprise one or more of the above mentioned embodiments of the first aspect disclosed prior to the introduction of the further aspect.

It is generally understood that the roof window according to the further aspect, in one or more embodiments of the present disclosure, may comprise a roof window according to one or more of claims 1-17.

In a still further aspect, the present disclosure relates to a building comprising one or more roof windows according to any of the claims of the present disclosure, and/or according to any of the previously described aspects and/or embodiments thereof, where the roof window(s) is/are installed in a roof structure of the building with said first outer major surface facing the interior of a building, such as at least when the frame is placed in a closed position.

In one or more embodiments of the building according to the still further aspect, the roof structure may have a roof pitch angle relative to horizontal which is above 17°, such as between 17° and 85°, such as between 25° and 75°.

In one or more embodiments of the building according to the still further aspect, the first plane defined by/comprising the exterior major surface of the glass sheet may be arranged with an angle less than 10°, such as less than 3° relative to the roof pitch. This may be the case when the frame is placed in a closed position (if the frame is movable by means of a hinge arrangement) or if the frame supporting the glass unit is a stationary, unmovable frame and hence in a fixed position.

In one or more embodiments of the building according to the still further aspect, the glass unit may provide a force onto the frame due to gravity, wherein said force is in a direction that is non-parallel with the first plane. In some embodiments, the force may extend with an angle between 5° and 85° or between 10° and 75° relative to the first plane

In some embodiments, the force may be in said direction when the frame is in a closed position (if the window is of the type that may be opened and hence comprises a movable frame), or in case the frame is of the fixed type where the window does not comprise a movable frame and the frame is hence it is unmovable when the roof window has been installed.

### Figures

Aspects of the present disclosure will be described in the following with reference to the figures in which:
- fig. 1: : illustrates a roof window according to embodiments of the present disclosure,
- fig. 2: : illustrates a roof window according to embodiments of the present disclosure, comprising a frame profile with a reinforcement profile arranged in an interior frame profile space of the frame profile
- fig. 3: : illustrates a roof window according to embodiments of the present disclosure, comprising an inclining exterior wall,
- figs. 4a-4b: : illustrates a roof window according to embodiments of the present disclosure, where it is colder outside a building than inside the room of the building to which the roof window is configured to provide sunlight,
- figs. 5a-5b: : illustrates a roof window according to embodiments of the present disclosure, where it is hotter outside a building than inside the room of the building to which the roof window is configured to provide sunlight,
- figs. 6-8: : illustrates different embodiments of a reinforcement profile according to embodiments of the present disclosure,
- fig. 9: : illustrates that an interior frame profile space of a frame profile is provided with a plurality of integrated partition walls extending inside the interior frame profile space, according to embodiments of the present disclosure,
- fig. 10: : illustrates an embodiment of the present disclosure, wherein a reinforcement profile extends into an interior frame profile space from an exterior frame profile wall that overlaps and extends along part of the glass unit, figs.
- 11a-11d: : illustrates different embodiments of the extension of a reinforcement profile wall part, relative to a diagonal plane, according to embodiments of the present disclosure.
- Fig. 12: : illustrates a roof window according to embodiments of the present disclosure, installed in a roof structure of a building having a roof pitch angle, and
- Fig. 13: : illustrates a building comprising a roof window according to embodiments of the present disclosure, installed in a roof structure of a building.

### Detailed description

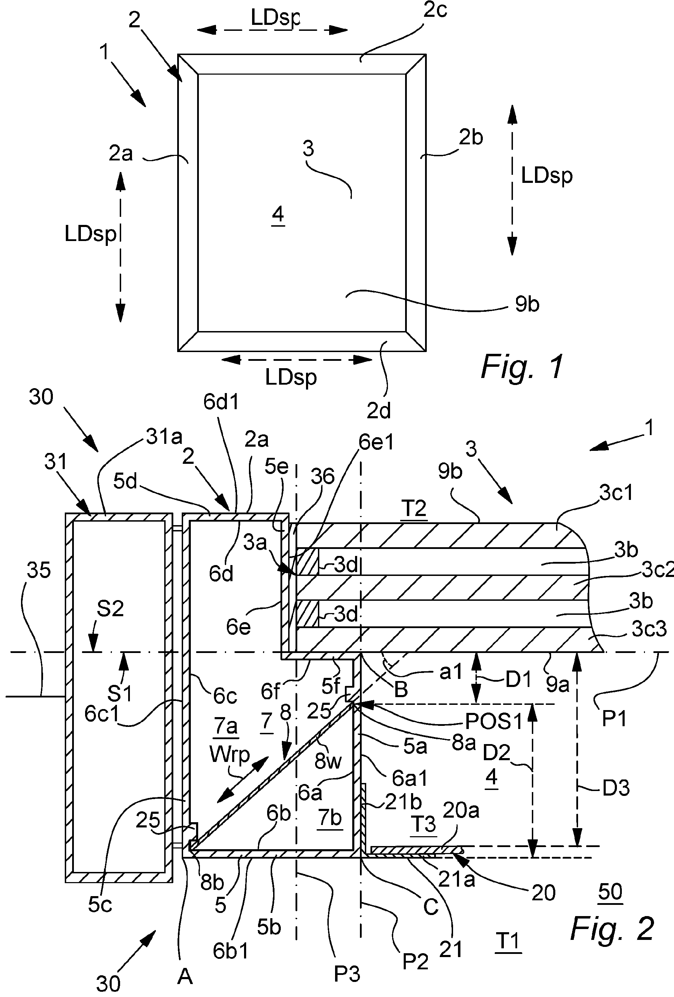

Fig. 1 illustrates schematically a roof window 1 according to embodiments of the present disclosure. The roof window 1 comprises a frame 2 comprising a plurality of elongated frame profiles 2a-2d, located around and framing the perimeter of a glass unit 3, such as an insulating glass unit. The window 1 is seen from the outside and the frame 2 supports the glass unit 3. The glass unit comprises the outer major surface 9b for facing away from the interior of a building when the window is installed in an aperture of a building.

The frame comprises four profiles 2a-2d comprising two parallel side profiles 2a, 2b and a further top profile 2c and a bottom profile. The top and bottom profiles are arranged parallel to each other, and extends perpendicular to the side profiles 2a, 2b. Hence, the frame profiles 2a-2d together provides a rectangular frame 2.

One or more of the frame profiles 2a-2d each has a longitudinal direction LDsp arranged to extend parallel to a side surface 3a (see fig. 2) of the glass unit 3, and the frame profiles 2a-2d together defines a frame opening 4 through which light, such as at least visible light (in the about 380 to about 750 nanometre wavelength range), can enter. The light entering through the frame opening also passes through the glass unit, as the glass unit, as illustrated, covers the frame opening 4, see also e.g. fig. 2.

Fig. 2 illustrates an embodiment a cross sectional view through a part of the side frame profile 2a in a plane that is perpendicular to the longitudinal direction of the profile 2a.

In this embodiment, the roof window 1 comprises a frame arrangement 30 comprising the frame 2, in this case a movable sash, and a stationary frame 31 to which the frame 2 is movably connected by means of a hinge arrangement (not illustrated in fig. 2. The frame arrangement comprising the hinge arrangement may provide a "centre" hung frame/sash 2 where the frame will pivot relative to the stationary frame 31 around a pivot axis placed between the ends (such as around a centre portion) of the side profiles 2a, 2b, and where the pivot axis extends perpendicular to the side profiles 2a, 2b, and substantially parallel to the profiles 2c, 2d. In other embodiments, the frame 2 may be top hung and hence the said axis may be placed around/proximate, such as at, the top profile 2c and be parallel thereto.

In other embodiments of the present disclosure, the frame 2 may be configured to be stationary arranged in a roof structure without the possibility of opening the window by means of a hinge arrangement.

The stationary frame 31 comprises frame profiles, such as hollow frame profiles (but these may also be substantially solid such as comprise or be made from a wood material), extending parallel to the respective one or more frame profiles 2a-2d providing the space 4. At least a part of said stationary frame profile(s) 31a is configured to overlap an exterior surface 6c1 of the wall 5c of the frame profile 2a facing away from the frame opening 4. This at least applies when the sash/frame 2 is in the closed position.

The stationary frame 31 is in fig. 2 configured to extend to a level below an outer surface 35 of a roof construction/roof structure of a building when installed in the building. Here, at least 30%, such as at least 50% or 90% of the height of the stationary frame 31 and/or height of frame 2 when the frame 2 is in a closed position, may be configured to be located at a level below the outer major surface 35 of a roof construction when the window is installed in the building. A part of the stationary frame 31 and/or frame 4 may be placed above the level of the outer roof surface 35. For example, least 5%, such as at least 10% or at least 20% of the height of the stationary frame 31 and/or height of frame 2 when the frame 2 is in a closed position, may be configured to be located at a level above the outer roof surface 35.

The plane P1, when the frame 2 is in a closed position, may be located above (as illustrated) or below the surface 35, or may be substantially flush/in the same plane with the surface 35
A glass unit 3 is supported by the frame 2. The glass unit 3 comprises a first outer major surface 9a for facing the interior of a building, and a second outer major surface 9b for facing away from the interior of a building when the roof window is installed in an aperture of a building, such as an aperture of a building roof structure.

Generally, in one or more embodiments of the present disclosure, the glass unit 3 may be an insulated glass unit with multiple glass sheets separated by inert gas or vacuum in a gap/cavity between the glass sheets.

As can be seen from fig. 2, the glass unit 3 may in embodiments of the present disclosure be an insulated glass unit such as a multi-glass-sheet unit comprising one or more heat insulating cavities 3b located between major surfaces of glass sheets 3c1, 3c2, 3c3 of the glass unit 3. In some embodiments, the insulted glass unit 3 may e.g. comprise a double glass sheet unit comprising one insulating gap 3b between two glass sheets. In the illustrated example, the insulated glass unit 3 is a triple glass sheet unit comprising two insulating gaps/cavities placed on opposing sides of a centre glass sheet 3c2 that is placed between two outer glass sheets 3c1, 3c3. The glass sheets 3c1-3c3 comprises major surfaces arranged parallel to each other. It is understood that even further glass sheets and hence also heat insulating cavities 3b may be provided according to further embodiments of the present disclosure.

In some embodiments, one or more coatings such as low-E coatings may be provided at one or both major surfaces of one or more of the glass sheets 3c1-3c3 of the insulated glass unit.

In further embodiments of the present disclosure (not illustrated), the glass unit 3 may be or comprise a vacuum insulated glass (VIG) unit comprising one or more evacuated gaps 3b. A plurality of support structures may be placed in the evacuated gap in order to maintain a distance between the glass sheets after evacuation of the gap(s)

As can be seen, the glass unit 3 also comprises an edge seal 3d for sealing the heat insulating gap(s) 3b around the pane perimeter. The edge seal 3d may, in case the gap 3b is a gas filled gap that is filled with an inert gas such as e.g. argon or another suitable gas, comprise a polymer or metal profile that adheres to or in other ways is attached to two opposing glass sheets, where the edge seal profile comprises a heat insulated (e.g. by means of a heat insulation material and/or air) interior (not illustrated), but it is generally to be understood that any suitable edge seal solution 3d for a roof window solution may be used. Such edge seal solutions 3d may also be known as "warm spacers" and may provide various features such as moist absorption, heat insulation and/or the like. In other embodiments, in case the insulated glass unit 3 is a VIG unit, the edge seal 3d may comprise a rigid, fused edge seal such as a metal solder or glass solder edge seal.

In some embodiments of the present disclosure, the glass unit 3 may be a laminated glass unit (not illustrated) comprising a lamination glass sheet that adheres to an outer major surface of the glass unit by means of an interlayer such as a PVB (Polyvinyl butyral) or EVA (ethylene vinyl acetate) interlayer. In that case, the lamination glass sheet may provide the outer major surface 9a for facing the building interior.

As can be seen, the frame profile 2a has a longitudinal direction LDsp (see fig 1) arranged to extend parallel to a proximate side surface 3a of the glass unit 3.

The side surface 3a of the glass unit 3 extends between the outer major surfaces 9a, 9b of the glass unit 3. In some embodiments, the side surface 3a may comprise or be defined by narrow side surfaces of the glass sheets 3C1-3c3 of the glass unit that extends between major surfaces of the respective glass sheet 3c1-3c3. Additionally or alternatively, the side surface 3a may comprise or be defined by a part of an edge seal 3d solution of the glass unit 3.

The side surface 3a can be considered a minor side surface of the glass unit 3.

As can be seen, the profile 2a-2d is hollow and comprises an interior frame profile space 7 enclosed by exterior frame profile walls 5a-5f. These exterior frame profile walls are the outer walls of the profile, and encloses a cavity.

The inner surfaces 6a-6f of the exterior frame profile walls 5a-5f encloses the interior frame profile space 7. These inner surfaces 6a-6f are in fig. 2 marked with a more bold line for improved understanding and identification of the interior frame profile space 7.

As described in more details later on, the space 7 may comprise a plurality of partition walls placed inside the cavity/space 7 that is enclosed by the exterior walls 5a-5f. In other embodiments, such partition wall(s) may be omitted.

As can be seen from fig 2, a frame reinforcement profile 8 is arranged in the interior frame profile space 7. The thermal conductivity coefficient *kᵣₚ* of the material of the reinforcement profile 8 is higher than the thermal conductivity coefficient *k_{sw}* of the material of the exterior frame walls 5a-5f.

In one or more embodiments of the present disclosure, the thermal conductivity coefficient of the material of the reinforcement profile 8 may be at least 5 times, such as at least 10 times, such as at least 50 times larger than the thermal conductivity coefficient of the material of the exterior frame walls 5a-5f.

In one or more embodiments of the present disclosure, the thermal conductivity coefficient of the material of the reinforcement profile may be at least 7 W/(m·K), such as at least 10 W/(m·K), such as at least 18 W/(m·K), for example at least 45 W/(m·K) at a temperature of 20°C,

In one or more embodiments of the present disclosure, the thermal conductivity coefficient of the material of the reinforcement profile 8 may be less than 100 W/(m·K), such as less than 50 W/(m·K), such as less than 25 W/(m·K) at a temperature of 20°C.

The reinforcement profile 8 may comprises or be made from a metal such as steel or aluminium. In some embodiments, said metal may be ferromagnetic. In some embodiments, aluminium may be excluded, and hence the reinforcement profile 8 may be or comprise a steel profile.

The frame reinforcement profile 8 has a reinforcement profile length extending substantially parallel to the longitudinal direction LDsp of the frame profile 2a-2d. The reinforcement profile length may be at least 60% such as at least 80%, such as at least 97% of the frame profile 2a length, or substantially correspond to the length of the frame profile 2a.

It is generally understood that, one, two three or all of the frame profiles 2a-2d of the frame 2 may be hollow, and that one, two three or all of the frame profiles 2a-2d of the frame 2 may in further embodiments comprise a reinforcement profile as described in the present disclosure.

The reinforcement profile 8 comprises a wall part 8w extending in a direction away from a first region/area POS1 located proximate a first plane P1. The first plane P1 comprises/is defined by the first outer major surface 9a of the glass unit 3. Moreover, the reinforcement profile 7 extends in the interior frame profile space 7 in a direction away from a second plane P2. The second plane P2 is perpendicular to the first plane P1. Additionally, the second plane P2 extends parallel to the longitudinal direction LDsp of the frame profile, and touches a part of an exterior surface 6a1 of a first exterior wall 5a of the frame profile that faces and is proximate the frame opening 4.

Hereby, the interior space 7 is split into a first space part 7a located at a first side of the reinforcement profile 8 wall 8w, and a second space part 7b located at a second side of the reinforcement profile 8 wall 8w.

It is generally understood that one, more or all of the frame profiles 2a-2d (see fig. 1) may comprise a frame reinforcement profile 8 according to one or more embodiments of the present disclosure, so that the interior space 7 is split into a first space part 7a located at a first side of the reinforcement profile 8 wall 8w, and a second space part 7b located at a second side of the reinforcement profile 8 wall 8w.

The reinforcement profile 8 in fig. 2 comprises a plate shaped element, such as comprises a substantially plane plate shaped element comprising the wall part 8w.

The wall part 8w comprises a first major surface facing towards the first space part 7a, and a second major surface facing towards the second space part 7b. The surface area of one or both of these surfaces may be defined by the width Wrp between the edges 8a, 8b and the length of the profile 8.

An insulation material (not illustrated, e.g. due to improving figure simplicity) may be provided in one or both of the space parts 7a, 7b. This insulation material may e.g. be a foamed polymer such as polystyrene, polyurethane insulation, polypropylene insulation and/or PET insulation, or a natural fibre material such comprising wood fibres, e.g. loose wood fibre insulation material. In some embodiments of the present disclosure (described in more details later on), the frame profile 2a may comprise a plurality of integrated "sub" spaces/cavities divided by one or more partition walls that is/are integrated in the frame profile and comprising or consisting of the same material as the exterior frame walls this/ these partition walls may be placed at one or both sides of the profile wall 8w. Some of these sub spaces/cavities may be left empty (i.e. filled with air) while others may be filled with an insulation material. In some aspects, all such integrated cavities may be left empty or filled with an insulation material.

In some embodiments of the present disclosure, an insulation material may also be provided in the interior of the stationary frame 31. The walls of the stationary frame 31 may in embodiments be made from the same material as the walls 5a-5f, and/or the insulation material in the stationary frame 31 may in embodiments of the present disclosure be one of the above mentioned, such as similar to an insulation material used in the space 7a, 7b.

The exterior frame profile walls 5a-5f (and optionally also one or more partition walls, if present) may be made from or comprise a polymer. For example, said polymer may comprise PVC, C-PVC Polypropylene (PP), polyethylene terephthalate or Polyurethane. In some embodiments of the present disclosure, the frame profile walls (5a-5f) may comprise PA6 Polyamide. The exterior frame profile walls 5a-5f (and/or partition walls) may in further aspect be provided with fibres such as glass fibres or carbon fibres embedded therein for improved strength. In some embodiments, the frame walls 5a-5f may comprise fibre composites of one or more of the above mentioned polymers.

The frame profile(s) 2a-2d may e.g. be extruded or pultruded profiles.

In one or more embodiments of the present disclosure, the thermal conductivity coefficient of the material of the exterior walls 5a-5f of the frame profile is less than 2 W/(m·K), such as less than 1 W/(m·K), for example less than 0.5 W/(m·K), for example less than 0.2 W/(m·K) or less than 0.15 W/(m·K) at a temperature of 20°C.

The first exterior frame wall 5a faces and is proximate the frame opening, and may be overlapped by the glass unit 3, e.g. so that the glass unit as illustrated extends in over and faces an outer surface of an exterior frame wall 5f. The exterior frame wall 5f meet with the first exterior wall 5a at a corner portion B proximate the glass unit surface 9a. The first exterior wall 5a extends from the corner B proximate the glass unit and towards a distal corner portion C where the first exterior wall 5a meet 2with a second exterior frame wall 5b. This second exterior frame wall 5b may be configured to face the interior of the building when the roof window 1 is installed in a building.

The second exterior wall 5b extends between the mentioned distal corner portion C and a further corner A. At the further corner A, the second exterior wall 5b meet with a side frame wall 5c that comprises a surface 6c1 that faces away from the first exterior frame wall 5a, and away from the interior space 7. The first exterior frame wall 5a also comprises a surface 6a1 that faces away from the interior space 7.

As can be seen, the frame reinforcement profile 8 may extend between the first exterior wall 5a (or corner portion B) and another exterior frame profile wall 5b and/or 5c of the frame profile 2a-2d.

In some embodiments of the present disclosure, the reinforcement profile wall part 8w extends with an acute angle a1 from the first plane P1, from a position proximate the corner portion B and in a direction oriented towards the corner portion A, from the first exterior wall 5a. The angle a1 may in some embodiments be less than 75° such as less than 60°, such as less than 45° or less than 30°.

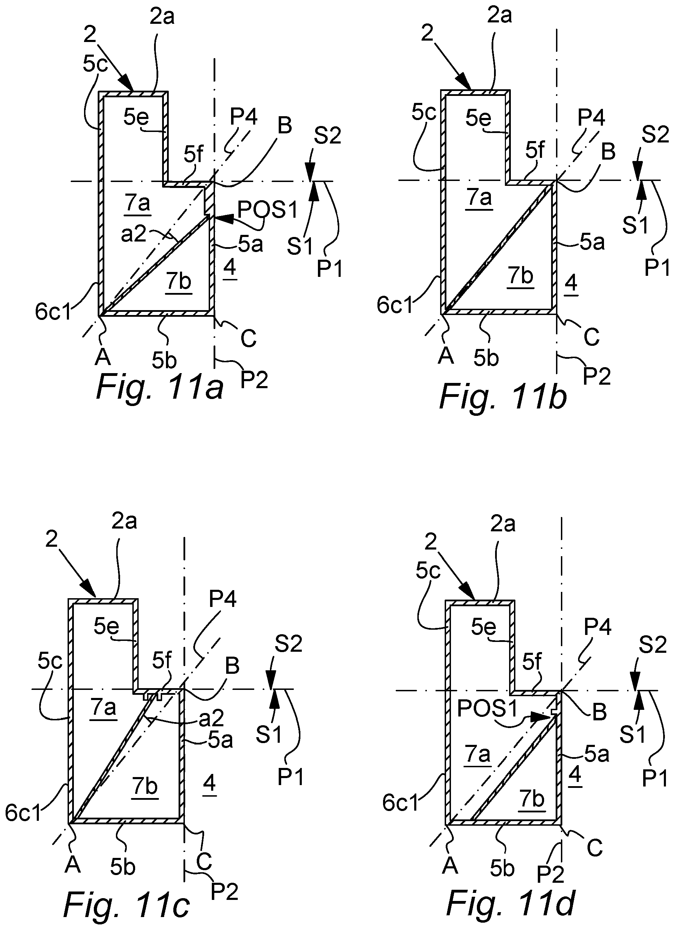

In some embodiments of the present disclosure, the reinforcement profile 8 wall part 8w may extend parallel to, or with an acute angle to, a diagonal plane (not illustrated in fig. 2 see, figs 11a-11b). The diagonal plane extends between the opposing corner portions A, B and extends in the longitudinal direction PDsp of the frame profile 2a. In case the wall 8w is not parallel to the diagonal plane (which is the case in Fig. 2 as the wall 8w extends from the corner A to the position POS1 below the corner B), the said acute angle between the reinforcement profile wall 8w and the diagonal plane extending between/through the corners A, B may be less than ± 30°, such as less than ±20° such as less than ±12°.

The reinforcement profile 8 comprises a width Wrp that provides that the reinforcement profile extends to provide that the interior frame profile space 7 is split into the first and second space parts 7a, 7b. In some embodiments, as illustrated in fig. 2, the wall part 8w may be substantially plane and hence extend substantially linear along the width Wrp direction.

As can be seen from fig. 2, the frame reinforcement profile 8, such as a first reinforcement profile edge 8a, may abut the first exterior wall 5a, 5f and/or a component thereof. The frame reinforcement profile 8 may comprise a second reinforcement profile edge 8b that abut the other exterior frame profile wall 5b, 5c or a component thereof around/proximate the corner portion A, such as at the corner portion A. This helps to provide an enhanced heat transfer between the exterior frame wall and the reinforcement profile so that heat can be transported towards or away from the wall 5a and/or proximate corner portion B dependent on the ambient temperature circumstances T1, T2.

The frame profile wall 5b is an exterior profile wall 5b configured to face the interior of the building. The frame profile wall 5c comprises an exterior frame profile wall 5c comprising an exterior surface 6b1 facing away from the frame opening 4.

The first exterior wall 5a extends from the corner B proximate the glass unit and towards a distal corner portion C where the first exterior wall 5a meet 2with a second exterior frame wall 5b. This second exterior frame wall 5b may be configured to face the interior of the building when the roof window 1 is installed in a building.

Fig. 2 moreover illustrates an embodiment of the present disclosure where the frame reinforcement profile 8 wall part 8w extends into the interior space 7 from a position POS1 at the first exterior wall 5a that is located between the first proximate corner portion B located proximate the first outer major surface 9a of the glass unit 3, and the distal corner portion C of the frame profile providing a transition from the first exterior wall 5a to the second exterior wall 5b of the frame profile, where the position POS1 is placed at a distance D1 to the proximate corner portion B and the first outer major surface 9a of the glass unit. Also, the position POS1 is placed with a second distance D2 to the distal corner C. The distances D1, D2 may be determined along the wall surface 6a1. The distance(s) D1, D2 may be determined based on isotherm profiles as explained e.g. in more details later on, e.g. to provide that the position POS1 is placed at an area, or near an area where temperatures may be high when it is hotter T2 outside 51 the building than inside T1. This may be determined based on real life measurements and/or computer simulations.

The distance D2 may in embodiments of the present disclosure be larger than the distance D1 (as illustrated) or smaller than or equal to the distance D1 (not illustrated).

The distance D1 may in embodiments of the present disclosure be at least 0.5 cm, such as at least 1 cm, e.g. at least 2 cm such as at least 4 cm. in some embodiments of the present disclosure, the distance D1 may be between 0.5 cm and 15 cm, such as between 0.5 cm and 7 cm.

In other embodiments of the present disclosure, the distance D1 may be approximately zero, so that the reinforcement profile extends from the corner B, and the edge 8a may hence be located substantially in/at the corner B.

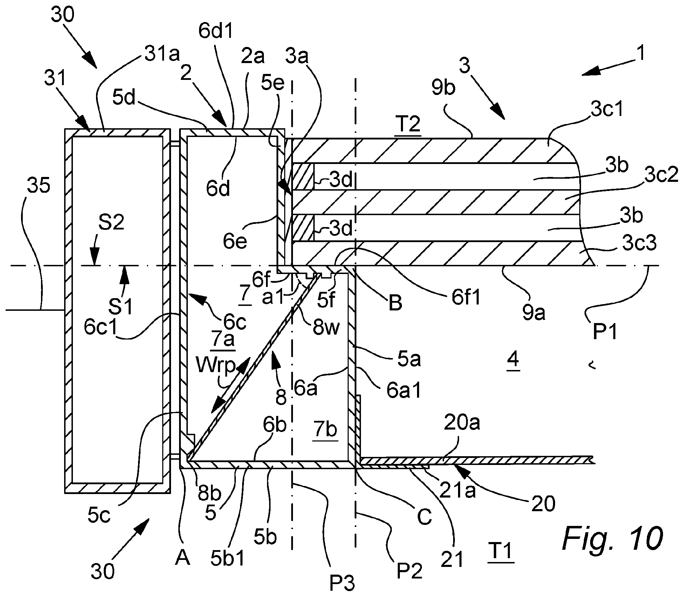

In some embodiments, the reinforcement profile 8 may extend from the corner B or the wall 5f (See also fig. 10) proximate the glass unit and comprising an outer wall surface 6f1 facing a part of the outer surface 9a of the glass unit 3.

The frame profile 2a may in embodiments of the present disclosure comprise one or more holding parts 25 for holding the reinforcement profile 8 in place.

In fig. 2, the holding parts 25 comprises protrusions extending from one or more exterior frame wall 5a, 5b, 5c, 5f so that the reinforcement profile 8 is maintained in the desired reinforcement position by means of said holding parts 25, for example by being wedged in the interior frame profile space 7 by means of said one or more holding parts 25.

In other embodiments of the present disclosure, one or more of said holding parts may comprise a slit or the like (not illustrated) in one or more frame walls 5a, 5b, 5c, 5f, and an edge 8a, 8b or the like of the profile 8 may extend into the slit so as to be maintained in the desired position. The slit and/or protrusion 25 may extend in the longitudinal direction of the respective frame profile LDsp.

Hence, in embodiments of the present disclosure, the reinforcement profile 8 may be slid/displaced from the frame profile end and into the interior cavity/space 7 of the profile 2a, to increase the structural integrity of the profile 2a. This provides that the two sub spaces/space parts 7a, 7b are placed at each their side of the profile wall 8w. Additionally, this may help to provide that the profile 8w may easily be removed again at the end of life for the window when the window is scraped, and hence, e.g. increased material reuse may be obtained.

Sliding/displacing the reinforcement profile out of the interior frame profile space again when the window 1 is to be scrapped may in some embodiments be provided/allowed without needing to first remove or release holding mechanisms such as screws, pop rivets or the like. The holding parts 25 may hence instead provide a track or tracks for receiving and holding the reinforcement profile.

In other embodiments of the present disclosure, the reinforcement profile 8 may be integrated in/unitary with the outer walls of the frame profile. Here, the reinforcement profile may be co extruded, co-pultruded or co molded with the remaining part of the frame profile in order to comprise components, such as fillers or fibres, that will provide a higher/increased thermal conductivity of the reinforcement profile when compared to the thermal conductivity of the exterior walls.

As can be seen from fig. 2, a part of the interior cavity 7 and a part of the frame reinforcement profile 8, 8w is placed opposite to the first exterior major surface 9a of the glass unit 3. This is in Fig 2 the case as the edge 8a of the reinforcement profile is placed opposite to the glass sheet surface 9a at the position POS1, and it is noted that the corner B where the first exterior wall is terminated and meet with exterior wall 5f may as illustrated may be placed opposite to the first outer surface of the glass unit. Hence, insulation material and/or air may in some embodiments be placed in the part of the space 7a and/or 7b that is arranged opposite to the outer major surface 9a of the glass.

As can be seen from fig. 2, the entire reinforcement profile 8, or at least the wall 8w, may in embodiments of the present disclosure be placed below the first plane P1 when the window 1 is installed in a roof structure of the building. Hence, the wall 8w may as illustrated be placed at the "interior side" of the plane P1 closest to the building interior when the window 1 is installed.

Hence, as can be seen from fig. 2, a part of the interior cavity 7 and a part of the frame reinforcement profile 8 extends from a position opposite to the first exterior major surface 9a of the glass unit 3, and through an edge plane P3 comprising said the side surface 3a of the glass unit 3. The edge plane P3 extends substantially perpendicular to the first plane P1.

The interior space 7, in the present example the 7a part of the space 7, extends to a position opposite the side surface 3a of the glass unit 3. Here, the interior space 7 opposite to the glass unit side surface 3a is enclosed by a plurality of the exterior walls 5c, 5d, 5e of the frame profile 2a. One of these walls 5d comprises an outer surface 6d1 that faces away from the building interior, and towards the outside of the building when the roof window is installed in the building. Another of these walls 5c comprises an outer surface 6c1 part that is placed opposite to the glass unit side surface 3a. A further of these walls 5e is placed proximate the side surface 3a and the said part of the space in the cavity is provided between the walls 5c and 5e. The wall 5e comprises an exterior surface 6e1 that faces the glass unit edge 3a.

As can be seen, a water tightening sealing material 36 such as a gasket, silicone material or the like may in some embodiments be placed between the side edge 3a and the wall 5e, but this may also be omitted dependent on the roof window solution and/or if the profile comprising the reinforcement profile 8 is a side profile 2a, 2b, a top profile 2c or a bottom profile 2d.

The window 1 comprises a cover 20 such as a blind, e.g. a roller blind or a venetian blind, pleated blind also known as insulating blind or a roller shutter. The cover 20 may be placed in a covering position by a human user or a control system controlling a motor driving the cover based on a predefined control code that is executed by a data processing unit, and which may be based on one or more sensor inputs such as temperature sensor input and/or time input.

In the covering position, the covering material 20a of the cover 20 is placed opposite to and with a distance D3 to the first outer major surface 9a. Here, the covering material 20a shields the building interior from sunlight, e.g. partly or fully dependent on the type of cover 20 and/or covering material 20a characteristics and/or the transparency thereof, The covering material may also be displaced, such as rolled up/winded, to a second "uncovering" position where the major part of the surface 9a is uncovered.

The distance D3 may be larger than the distance D1, and/or less than or substantially equal to the sum of the distances D2 + D1. In some embodiments, the distance, D3 that may be determined perpendicular to the surface 9a, may be less than or equal to a distance determined between the plane P1 and a plane (not illustrated) that is parallel to the plane P1 and extends through the corner portion C.

In some embodiments, the distance D3 may be between 2 cm and 35 cm, such as between 3 cm and 15 cm, such as between 3cm and 9 cm.

The cover 20 may in other embodiments comprise a further/additional glass pane separate to the glass unit 20.

The cover 20 may be pre-installed at the roof window, or may be retrofitted to the window 1 after window installation. In some embodiments, the cover may be a cover that is specifically designed for and fits to the window size and/or model, e.g. by being a cover 20 type and size selected between a set of predefined cover types and sizes provided by the window manufacturer. Alternatively, the cover 20 may be a generic cover that is cut into the desired size by a user after receipt. In further embodiments, the cover 20 may be adapted in size at a cover provider entity before shipping based on received window information related to a specific installed window, such as obtained from a label at the window (e.g. comprising a QR code and/or window size information written in letters) and/or from measurements provided at the window.

In some embodiments of the present disclosure, the roof window 1 comprises a cover connection system, such as comprising one or more pre-installed brackets or recesses (not illustrated), for mounting of a cover such as a blind. These may be installed already at delivery of the window, and hence provide a connection option later on in case a cover should be subsequently installed. A cover housing (e.g. comprising a drum for winding/unwinding cover material 20a, an electric motor for driving the drum during winding and unwinding, control system and/or the like) may be placed in such a cover housing.

Moreover, a cover material guiding arrangement, such as guiding rails 21 or another cover guiding system, such as a wire system, may be placed at or near each side of the window frame 2 for guiding the cover material 20a and assuring that the cover material 20a does not fall into the room 50. Such a cover material guiding arrangement may be relevant in roof windows where an interior cover such as a blind may be installed due to gravity. The rail solution 21 may also help to reduce inflow of light near the frame as the cover material may need to be a bit more narrow than the width of the frame opening 4 in order to ease movement of the cover material.

The rail solution 21 illustrated in fig. 2 is a L-shaped rail solution that is mounted at the frame 2, in the present example at wall 5a and/or 5b. This may be provided by one or more mechanical fasteners and/or an adhesive. The rail 21 may comprises a guiding wing 21a that extends away from the frame for guiding the cover material 20a to prevent the cover material 20a from moving away from the window pane due to gravity when it is in the covering position. A connection part/wing 21b of the rail 21 is attached to the frame 2

The reinforcement profile provides provide a temperature management as also described in more details later on in relation to further figures.

When the temperature T1 in the interior of the building is higher than the temperature T2 at the exterior of the building, heat will be conducted from the wall 5c, 5b and/or corner portion A and towards the wall 5a so as to increase the temperature of the wall 5a proximate the glass unit, thereby preventing or reducing condensation issues at the wall 5a and/or glass unit 3.

When it gets hot outside T2, the temperature rises at the interior side of the glass unit due to sunlight in the space between the surface 9a and the covering material 20a, especially if the cover 20 is in the covering position.

In some situations where an interior cover 20 such as a blind or additional glass is installed at the roof window 1 (and is in a covering position to reduce sunlight entering the building interior), computer simulations and "real life test" have shown that the temperature of the first exterior wall 5a facing the frame opening 4 may get above 90°C, and even above 100°C in case the reinforcement profile 8 is omitted. This may be caused by a high temperature T3 between cover 20 material 20a and inwardly facing major glass unit surface 9a. Computer simulations however indicates an improved heat management at the first exterior wall 5a in case the reinforcement profile 8 with the wall part 8w according to the present disclosure is installed, so that the temperature at the first frame wall 5a facing the space between the cover 20 and window surface 9a is reduced. This also applies when compared to simulations where a major surface of a reinforcement profile is installed to abut and extend along a frame wall. When the temperature T3 gets high in the space between the surface 9a and the cover 20, the reinforcement profile 8 wall 8w guides heat away from the wall 5a, thereby reducing the wall 5a temperature, and this heat is guided towards the wall(s) 5b, 5c at the corner portion A through the interior space 7 where it is transferred to the wall 5b and/or 5c, as the temperature T1 is lower than the temperature T3 in the space between the glass unit surface 9a and the cover 20.

In the example of fig. 2, the reinforcement profile 8 hence transfers thermal energy by thermal conduction between the opposing corner portions A, B of the frame profile, in the present example these are diagonally arranged, and not neighbouring arranged corner portions. The reinforcement profile 8 does however substantially not transfer thermal energy by thermal conduction, such as direct thermal conduction, between the distal corner portion C and the opposing corner portions A, B as it extends through the space 7 and divides it into the space parts 7a and 7b.

It is generally to be understood that the distal corner portion is placed at the path along the exterior walls 5a, 5b, between the proximate corner portion B and the corner portion A.

The reinforcement profile 8, by means of the wall 8w, transfers an increased amount of thermal energy by thermal conduction through the wall 8w along the width Wrp between the opposing corner portions A, B of the exterior frame wall 5a-5f of the frame profile, when compared to the amount of thermal energy transported by means of the reinforcement profile wall 8w between one or both of said opposing corner portion A, B and the distal, intermediate corner portion C of the exterior frame wall 5a-5f . The wall 8w is hence thermally insulated from the distal corner portion C by means of the space part 7b, and the insulation solution, such as air or an insulation material as previously described.

Additionally, the reinforcement profile 8 increases the mechanical structural integrity of the frame profile 2a (and hence the window 1) and makes the profile 2a more resistant to bending and/or torsion of the profile 2a.

In fig. 2, the first wall 5a is placed parallel to the plane P2 and the plane P2 extends along the wall 5a.

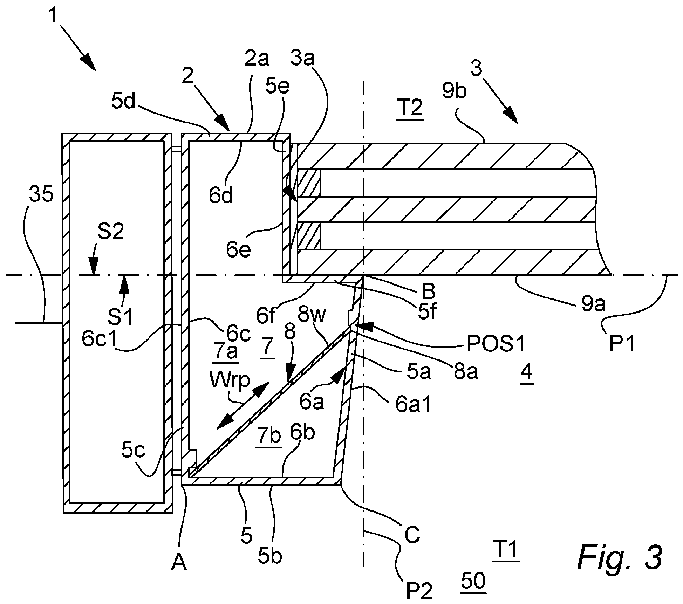

Fig. 3 illustrates schematically an embodiment of the present disclosure, having several features in common with the embodiment illustrated in fig. 2. However, here, the first wall 5a inclines away from the second plane P2 and away from the frame opening 4, from the position of the wall proximate the pane. The angle (not indicated in the figure) between the plane P2 and the wall 5a may be an acute angle. In some embodiments, this acute angle may be less than 45°, such as less than 30°, such as less than 20°. In certain embodiments, the angle between wall 5a and plane P2 may be between 2° and 45°, such as between 5° and 20°. The plane P2 is perpendicular to the first plane P1.

The second plane P2 is here also perpendicular to the first plane P1. Additionally, the second plane P2 extends parallel to the longitudinal direction LDsp of the frame profile. Moreover, the second plane P2 touches a part of an exterior surface 6a1 of a first exterior wall 5a of the frame profile that faces and is proximate the frame opening 4, in this case at a position proximate the glass unit 3 around/near/proximate the corner B.

It is understood that the wall 5a may have various shapes. For example, in a further example (not illustrated) the wall 5a may comprise a first proximate wall part that is substantially parallel to the second plane P2 (as in fig. 2) and proximate the glass sheet, where this first proximate wall part extends from the corner B. A second wall part of the first wall 5a may extend as illustrated with an angle to the second plane P2, towards the distal corner C, e.g. with an angle to the second plane P2 as described above.

The frame profile 2a corner portions A, B, C may generally be defined, in embodiments of the present disclosure as providing an angle of at least 50°, such as at least 75°, such as at least 85°, such as around 90° between the exterior walls meeting at the respective corner A, B, C.

In fig. 2, the angle between the between the exterior walls at the respective frame profile corners A-C are illustrated as all being around such as approximately 90°.

In fig. 3, the angle at frame profile corner B (between exterior walls 5f-5a) is less than 90° and the angle at distal frame profile corner C (between exterior walls 5a-5b) is larger than 90° due to the inclination of the exterior wall 5a facing the frame opening 4, whereas at frame profile corner A, the angle (between exterior walls 5b-5c) is around such as approximately 90°.

The second plane P2 may generally touch a part of an exterior surface 6a1 that is proximate to the frame opening 4.

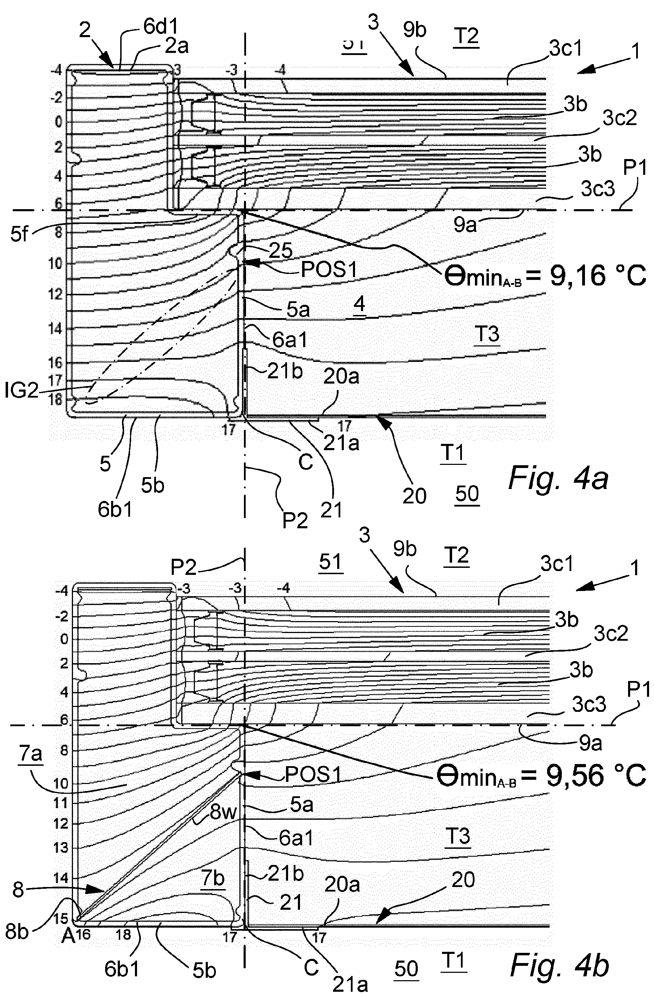

Figs. 4a-4b illustrates a cross sectional view of a frame profile and glass unit of a window according to embodiments of the present disclosure that is substantially similar to that illustrated in fig. 2. Here isotherms are illustrated in a computer simulated scenario where it is cold outside/at the outer surface 9b of the glass unit 3 (temperature T2), more specifically simulated to be around such as approximately - 5 °C. Moreover, the temperature T1 in the room 50 of the building is higher, approximately 20 °C. The cover 20 is in both cases of figs 4a and 4b placed in the covering position thereby providing the space between the glass unit 3 surface 9a and the cover that is referred to in fig. 2 by the distance D3 and which is enclosed by walls 5a of the relevant frame 2 profiles 2a-2d, the pane surface 9a and the cover material 20a.

Fig. 4a illustrates a simulated cross sectional view of the frame profile 2a subjected to these temperature conditions, but where the reinforcement profile 8 is omitted from the interior 7 cavity/space 7. Fig. 4b illustrates a cross sectional view of the same frame profile 2a and pane of the roof window 1 subjected these temperature conditions (T2~ -5 °C and T1 ~ 20 °C, but where the reinforcement profile 8 is provided in the interior 7 cavity/space, according to embodiments of the present disclosure.

It is generally to be understood that a finite element analysis application for assessing e.g. 2D thermal bridges may be used for providing the computer simulations and e.g. an isotherm representation as illustrated in figs. 4a-5b. Generally, finite element analysis may be used for thermal modelling and mechanical modelling, also within the field of calculating/determining heat flows, thermal bridges, isotherms and others. The finite element analysis may in some embodiments of the present disclosure be provided based on a suitable standard, such as an ISO standard, related to thermal performance of building components such as thermal performance of windows, doors and/or shutters.

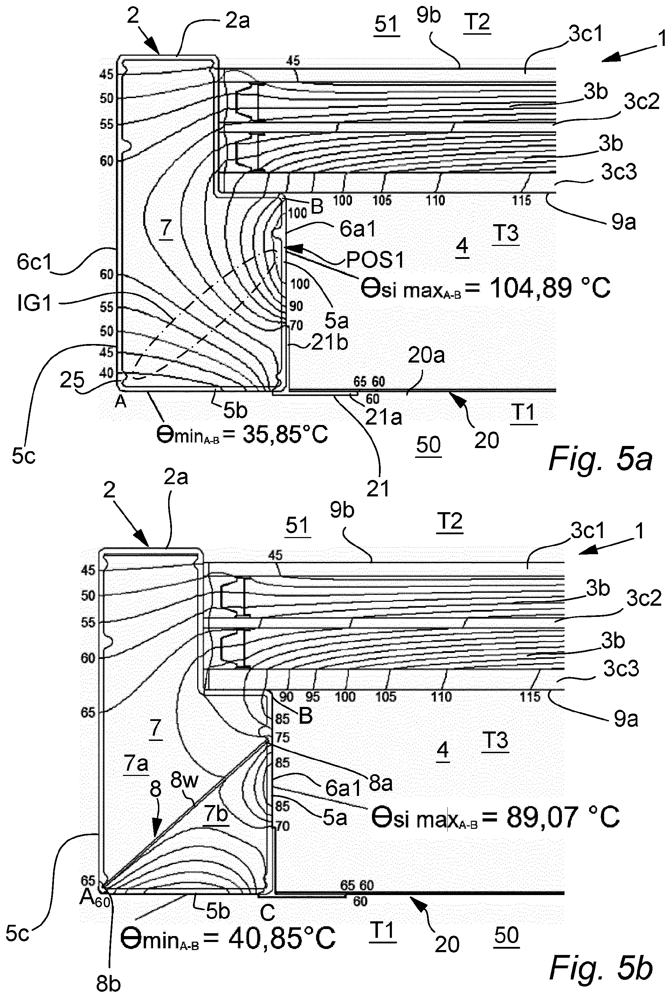

For figure simplicity, the indications of "cut" portions by means of hatching is omitted as this will provide a more confusing view of the isotherms illustrated in fig. 4. Additionally, some reference numbers are omitted to improve understanding of fig. 4a-4b (the same applies for figs. 5a-5b that are described in more details further below)

As can be seen the temperatures of the frame at the interior T1 near/at the cover 20 may be around such as approximately 17 °C near the frame profile corner C, and the temperature at the outside surface 9b seems to increase towards the edge of the glass unit seems to increase, the mentioned latter temperature increase may be provided due to heat transfer around/near the edge of the glass unit 3.

The isotherm lines illustrated are simulated with a temperature difference between neighbouring isotherm lines that is 1°C. In other embodiments, the difference between neighbouring/adjacent isotherm lines may be larger, such as around such as approximately 3°C, or 5°C. This may also be referred to as the isotherm resolution. For example, it may be understood from fig. 4a that at least when the reinforcement profile 8 is omitted in the above mentioned (and illustrated) temperature conditions, the temperature around/proximate or at the first position POS 1 as previously explained where the frame reinforcement profile 8 wall part 8w is to extend into the interior space 7 from the position POS1 at the first exterior wall 5a may be between 12°C and 13°C.

What is moreover illustrated in fig. 4a is that the temperature at the corner portion B (no reference in the figure to improve simplicity - see fig. 2 or 3) may be around such as approximately 9°C (simulated to be 9.16°C) at the simulated temperature conditions. The temperature at corner portion A is around/approximately 18-19°C.

As can be seen, a plurality of isotherm lines forms an isotherm group IG2 that is indicated by the dash-dotted oval in fig. 4a. This isotherm group G2 comprises isotherm lines indicating a temperature between 13-18 °C. Hence, the group GR2 may represent a grouping of isotherm lines in the space 7 representing a temperature difference of around such as approximately 5°C in the illustrated example with an outside temperature of -5°C and an inside general room 50 temperature of 20°C, but this may also be a larger or lower temperature difference. For example, the isotherm group IG2 under the simulated temperature conditions may represent a temperature difference range between 2°C and 10°C, such as between 3°C and 8°C.

As can be seen in fig. 4b, when the reinforcement profile 8 is inserted in the cavity/space 7, and thereby provides the space parts 7a, 7b, the isotherms/isotherm lines naturally changes compared to the conditions of fig. 4a as the reinforcement profile 8 provides a heat conduction (it may also be considered a cold bridge) through the cavity/space 7 between the corner portion A and the position POS1 and crosses through the isotherm lines in the space illustrated in fig. 4a.

The reinforcement profile 8 provides that the temperature at the corner portion B will increase, in the present case to be about 9.56°C, i.e. an about 0.5°C temperature increase at the corner portion B that may be put down to the presence of the reinforcement profile 8 in the simulated temperature conditions. This also provides an increase in temperature at the first exterior wall 5a between the position POS1 and the corner portion B. It can moreover be seen, when comparing fig. 4a and 4b, that the temperature drops/reduces (see fig. 4b) at the corner portion A near the edge 8b when the reinforcement profile 8 is inserted, apparently due to heat transmission towards the position POS1. The increase in temperature at corner portion B and also at first exterior wall 5b may help to reduce condensation issues at the glass unit 3 and/or at the exterior wall 5b surface 6a1.

Turning to fig. 5a-5b. The same cross sectional view as illustrated in figs 4a-4b is provided (also with the cover 20 in the covering position) but where the roof window 1 is subjected other temperature conditions. In this case, the temperature condition T2 at the outside surface 9b of the glass unit 3 is simulated to be higher than the interior room 50 temperature T1. The temperature T1 may e.g. be set by a HVAC (heating, ventilation, and air conditioning system) or the like. The interior general ambient air temperature T1 is in the simulation set to around/approximately 20°C, and the exterior temperature at the glass sheet surface is simulated to around/approximately 45°C. In fig. 5a, the reinforcement profile 8 is omitted, and in fig. 5b, the reinforcement profile 8 is provided in the space/cavity 7.

Hence in fig. 5a-5b, the temperature condition T1 < T2 applies, i.e. the general ambient air temperature T1 in the room 50 of a building in which the roof window is installed (and which the roof window is configured to provide sunlight to though the glass unit 3) is lower than the temperature T2 at the outer major surface 9b of the insulated glass unit 3. This is different from the Fig 4a-4b scenario where the temperature condition T1 > T2 applies, i.e. the general ambient air temperature T1 in the room 50 of a building in which the roof window 1 is installed is higher than the temperature T2 at the outer major surface 9b of the insulated glass unit 3.

The isotherm lines illustrated in figs 5a-5b extending through the interior space 7 are simulated with a temperature difference between neighbouring isotherm lines that is 5°C. In other embodiments, the difference between neighbouring isotherm lines may be larger, such as around/approximately 10°C, or lower such as around/approximately 3°C. This temperature difference between neighbouring isotherm lines of 5°C is selected to increase simplicity and understanding of figs. 5a-5b since providing a temperature difference between neighbouring isotherm lines that was e.g. 1°C (as in the Fig. 4a-4b scenario) would provide a more complicated/cramped figure that may also be harder to analyse.

As can be seen from both figures 5a-5b, a very high temperature T3 in the space between the cover material 20a in the covering position and the inwardly facing surface 9a of the glass unit 3 may occur in these temperature conditions. As can be seen, the temperature at the glass unit 3 surface 9a facing the building interior may be around such as approximately 100°C or even more at parts of the surface 9c more distant to the frame profile 2a. Also, real life tests confirms such high temperatures when very hot temperature conditions outside are present. The high temperatures T3 between the glass unit 3 surface 9a and the cover material 20a provides that the frame profile wall 5a is heated significantly.

As illustrated in fig. 5a, when the reinforcement profile 8 is omitted, the wall material of the first wall 5a may be heated to a temperature above 70°C such as above 90°C, such as above 100°C. The highest temperature may be around/proximate, such as at, the area of the first position POS 1 that may be as high as 104.89°C as illustrated in fig. 5a by reference θsi max_{*A*-*B*} in fig. 5a.

However, after installation of the reinforcement profile as illustrated in fig. 5b, the maximum temperature at the frame profile wall 5a is significantly reduced to 89.07°C (see ref. θsi *max_{A-B}*)*.* What is also noted is that the area where the temperature is highest at the wall may move a bit towards the distal corner portion C when compared to fig 15a where the reinforcement profile is omitted.

Moreover, it can be seen that the temperature at the corner portion A increases from about 35-40°C to around/approximately 60°C when the reinforcement profile 8 is inserted in the cavity/space 7. Also, the minimum temperature at the wall 5b increases from around/approximately 36°C to around 41°C (see ref. θmin*_{A-B}*). This is apparently caused by the reinforcement profile 8 wall 8w transferring the heat from the wall 5a through the cavity/space 7 and to the corner portion A where the heat is transferred to the ambient air of the interior of the building or the like. Hence, the heating of the space between the surface 9a and the cover material 20a causes a heating of the wall material of the first wall 5a, but this heat is continuously guided away by conduction heating provided by the reinforcement profile 8 wall 8w, from the position POS1 through the profile cavity/space 7 and to the other profile 2a walls 5b, 5c.

The position POS1 may be arranged at the half or third of the first exterior wall 5a that is proximate the first outer major surface of the glass unit. This area may be increasingly heated when higher temperatures occur outside and e.g. a blind is arranged in a covering position as e.g. illustrated in figs 5a-5b.. Hence, arranging the wall part of the reinforcement profile to extend from this part may help to provide e.g. improved cooling here.

As illustrated in fig. 5b (and as previously disclosed), the reinforcement profile 8 wall 8w is arranged to extend away from the first region at POS1 located proximate the first plane P1 defined by the outer major surface 9aof the insulated glass unit 3, towards the corner A in a direction so that a first isotherm group IG1 illustrated in fig. 5a comprising a plurality of first isotherms/isotherm lines is crossed.

When looking at fig. 5a, it can be seen that the first group IG1 of isotherms (that falls within the dash-dotted oval) when it is hot outside (in the present case T2=45°C and T1=20°C) will be crossed by the reinforcement profile 8 (envisioning that the reinforcement profile 8 is inserted in fig. 5b). The crossed isotherm group IG1 represents a temperature difference of more than 60°C (from about 40°C proximate corner portion A to about 104°C at the position POS1). Hence, the reinforcement profile 8 provides a substantial heat transfer from POS1 to the corner portion A, thereby cooling the wall 5a material when compared to if the reinforcement profile 8 was omitted.

Dependent on the constitution of the frame arrangement, the insulation solution in the space part(s) 7a, 7b and/or the like the first isotherm group IG1 that is crossed may represent a temperature difference of at least 20°C, such as at least 40°C, such as at least 55°C in the interior space 7 when T2=45°C and T1 = 20°C.

In some embodiments of the present disclosure, the position POS1 near the edge 8a (see e.g. figs 2 and 3) may be selected to be at the location where the highest temperature at the wall 5a may be present, according to measurement by temperature sensor(s) and/or computer simulations, this is the case in the example of figs. 5a-5b. In other embodiments, The position POS1 may be at another location, e.g. closer to the glass unit 3 surface 9a and proximate corner portion B so as to still reduce exterior wall 5a temperatures here when exterior temperature T2 is high (see figs 5a-5b), but also to provide an increased heating around/proximate the corner B, such as at the corner B when the exterior temperature T2 is low (See figs 4a-4b), such as below 0°C and the interior temperature T1 is around/approximately 20°C.

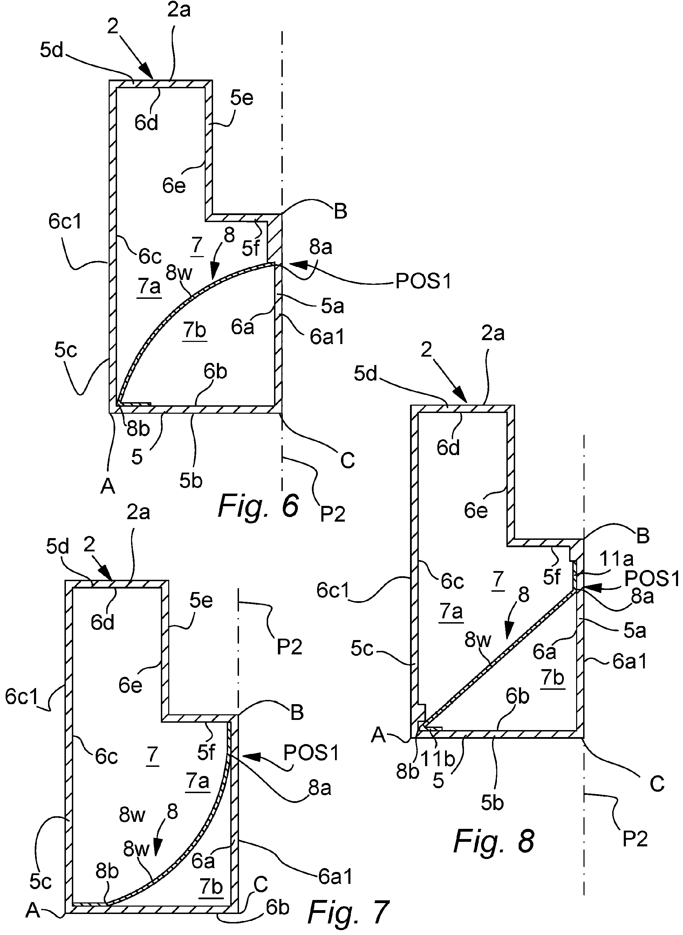

Fig.6 illustrates a cross sectional view of a frame profile 2a according to embodiments of the present disclosure, wherein the wall 8w of the reinforcement profile that extends through the interior space 7 and provides the space parts 7a, 7b, has a curved shape. The glass unit 3 is omitted from fig. 6 to obtain simplicity of the figure.

The curvature of the wall 8w in fig 6 provides a concave wall 8w surface facing the distal corner portion C, and a convex wall 8w surface facing away from the distal corner C.

Fig.7 illustrates a cross sectional view of a frame profile 2a according to further embodiments of the present disclosure, wherein the wall 8w of the reinforcement profile that extends through the interior space 7 and provides the space parts 7a, 7b, has a curved shape. The glass unit 3 is omitted from fig. 7 to obtain simplicity of the figure. The curvature of the wall 8w in fig 7 provides a concave wall 8w surface facing away from the distal corner portion C, and a convex wall 8w surface facing the distal corner C.

The shape of the wall 8w, such as providing a curvature as illustrated in figs 6 or 7 may e.g. be adapted according to simulated isotherms and/or measurements to adapt the temperature management provided by the reinforcement profile 8, in order to provide an improved heating and/or cooling of the wall 5a. This may be provided based on the general frame 2 design, such as shape and/or dimensions of the exterior walls 5a-5f, and/or insulation solutions used in the spaces 7a, 7b and/or the like.

Fig. 8 illustrates a cross sectional view of a frame profile 2a according to further embodiments of the present disclosure, where the reinforcement profile 8 comprises wall connection legs 11a, 11b for providing a larger contact surface for touching/pressing towards the respective wall 5a, 5b. A part of the wall connection leg 11a, 11b extends along the interior surface of the respective exterior wall 5a, 5b that faces the space 7, preferably touching the respective interior wall surface of the exterior wall. This may e.g. help to provide improved heat transfer between the walls 5a, 5b/5c through the reinforcement profile wall 8w. Additionally or alternatively, it may provide improved mechanical support.

The wall connection legs 11a, 11b may be provided by means of bends or the like on the reinforcement profile 8. In further embodiments, one of the wall connection legs 11a, 11b may be omitted (see fig. 6) and a narrow edge having a thickness substantially corresponding to the reinforcement profile thickness may be the part touching the wall(s) 5a, 5b. As can be seen from figs. 2-5b, both wall connection legs 11a, 11b may also be omitted.

In the example of fig. 8, it can be seen that the wall connection leg 11a proximate the wall 5a may in some embodiments of the present disclosure extend from the profile edge 8a at the position POS1 and towards the corner portion B to be proximate the glass unit when installed at the frame. This may help to provide improved heat transfer towards the glass unit. In other embodiments, the wall connection leg 11a may extend towards the distal corner C from the edge 8a at the position POS1 where the reinforcement wall 8 extends into the space 7.

Generally, the edge 8a and/or 8b may either be provided by the narrow side edge of the reinforcement profile 8 as illustrated in figs. figs. 2-5b, but it may also be provided by a bend on the profile as illustrated in figs. figs. 6-8 in case a wall connection leg 11a, 11b is provided.

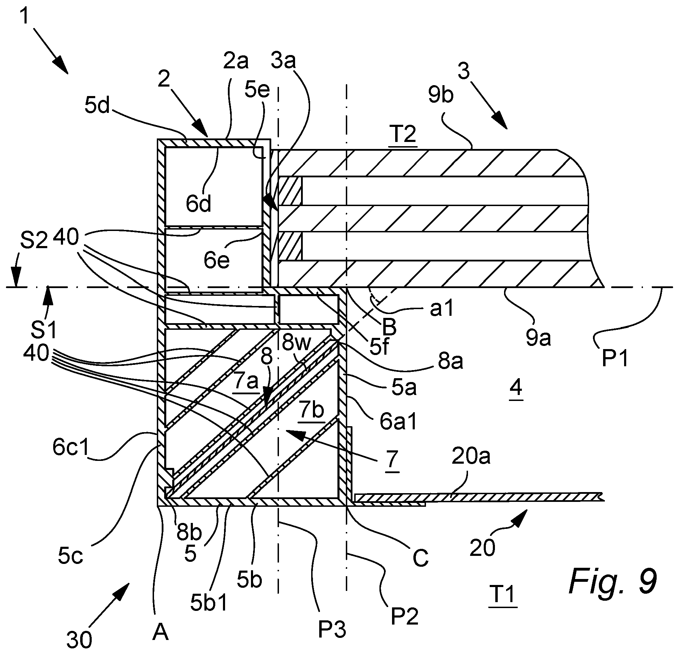

Fig. 9 illustrates a cross sectional view of a roof window 1 comprising the frame profile 2a according to embodiments of the present disclosure, where partition walls 40 are provided in the interior frame profile space 7.

These partition walls divides the interior frame profile space 7 a plurality of heat insulating cavities by means of partition walls 40 integrated in the frame profile 2a.

In some embodiments of the present disclosure, the partition walls 40 are provided in a polymer material. The partition wall material may in some embodiments of the present disclosure be made from or comprise the same material as the exterior frame walls 5a-5f.

It is generally understood that the interior frame profile space 7 may comprises at least one, or a plurality of partition walls 40. The partition wall(s) 40 is/are integrated in the frame profile 2a-2d construction and extends into and/or through the interior frame profile space 7. The partition wall(s) 40 may e.g. be pultruded and/or extruded together with the remaining frame profile, such as the exterior frame profile walls 5a-5f.

In fig. 9, some of the partition walls 40 are arranged to extend along the surface of and substantially parallel to the wall 8w of the reinforcement profile. This may be the case for one partition wall 40 or for more than one partition wall 40.

As can also be seen, some of the partition walls may additionally or alternatively be arranged to extend e.g. parallel to one or more exterior walls 5a-5f of the frame profile 2a.

In still further embodiments of the present disclosure, no partition walls 40 may be provided in the space 7, see e.g. figs 2-3.

Fig. 10 illustrates a cross sectional view of a roof window 1 comprising the frame profile 2a according to embodiments of the present disclosure, wherein the reinforcement profile 8 extends into the interior frame profile space 7 from an exterior frame profile wall 5f that faces an overlapping part of the glass unit.

The exterior frame profile wall 5f comprises a major surface (when compared to the general wall thickness of the exterior frame profile walls 5a, 5b) that extends along and faces the inner surface 9a of the glass unit. The glass unit hence overlaps the frame profile wall 5f.

In some embodiments of the present disclosure, the glass unit 3 may be attached to this exterior frame profile wall 5f by means of an adhesive placed between the surface 9a and surface 9f1.

Fig. 11a-11d illustrates different embodiments of the extension of the reinforcement profile wall part 8w, relative to a diagonal plane P4 that extends between and through the opposing corner portions A, B and in the longitudinal direction PDsp of the frame profile 2a. The glass unit 3 is omitted from the figures for figure simplicity, but the plane P1 is maintained.

The corner B is arranged to be proximate the glass unit 3 when installed and may as illustrated be configured to be placed with a distance from the glass unit edge 3a, at a position opposite to the interior major outer surface 9a of the glass sheet 3 (see previously described figures). The opposing, diagonal corner A is placed proximate to the exterior side wall 5c that comprises the exterior wall surface 6c1 facing away from the frame opening, and that side wall 5c is so to say terminated at the corner A. The diagonal plane P4 runs through these two corners A, B.

In fig. 11a and 11c, the reinforcement profile 8 wall part 8w may extends with an acute angle a2 to the diagonal plane P4, hence, in case the wall 8w is not parallel to the diagonal plane P4, the angle a2 between the reinforcement profile wall 8w and the diagonal plane extending between/through the corners A, B may be less than ±20° such as less than ±12°, e.g. less than ±6° relative to the diagonal plane P4.

In fig. 11a and 11d, the reinforcement profile 8 wall part 8w extends substantially parallel to the diagonal plane P4. In fig. 11d, the reinforcement profile 8 wall part 8w extends parallel to, but with a distance to, the diagonal plane P4.

In fig. 11b, the reinforcement profile 8 wall part 8w is substantially coinciding with the diagonal plane P4. It can be seen from fig. 11b that the reinforcement profile may extend substantially from the corner B and towards e.g. the transverse corner A.

Naturally, it is to be understood that the reinforcement profile 8 may extend e.g. from the corner portion B ( See fig. 5b), from the wall 5f (see fig. 10 or 11c) or from the first wall 5a (see e.g. fig. 11a or 11d, fig. 1 or several other figures described above) and through the space 7. For example towards the corner A (see fig. 11a-11c, fig 1 or several of the other figures described above), towards the wall 5b (see fig 11d) or towards the wall 5c as e.g. previously suggested. This may still be provided so that the reinforcement profile 8 wall part 8w may extends with an acute angle a2 to the diagonal plane P4, or parallel to the diagonal plane P4.

In some embodiments of the present disclosure, the wall part 8w of the reinforcement profile may be terminated at the wall 5c with a distance to the corner A. This distance may e.g. be less than half of the length of the wall 5c, such as less than 1/3 of the length of the wall 5c extending away from the corner A.

In all of the embodiments of figs 11a, 11d, the reinforcement profile 8 wall part 8w extends in the interior frame profile space (7) in a direction away from the second plane P2, so that the interior space 7 is split into a first space part 7a located at a first side of the reinforcement profile, and a second space part 7b located at a second side of the reinforcement profile. As also previously disclosed, the second plane P2 (see e.g. figs 2-5a) will be perpendicular to a first plane P1 (not illustrated in figs 11a-11d) comprising/defined by the first outer major surface 9a of the glass unit 3 when the glass unit is arranged in the frame 2, and additionally, the second plane extends parallel to the longitudinal direction LDsp of the respective frame profile 2a (see e.g. fig. 1). The plane P2 touches a part of the exterior surface 6a1 of the first exterior wall 5a of the frame profile that faces and is proximate the frame opening 4.

The reinforcement profile 8 wall part 8w may hence, as e.g. illustrated in figs 11a-11d be configured to be diagonally oriented between the corners A, B, according to the diagonal plane P4 extending through the corners A, B.

As can be seen in e.g. fig. 2, the envisaged first plane P1 comprises a first side S1 and a second side S2. The first plane side S1 faces away from the first exterior, major glass unit surface 9a, and the second plane side S2 faces towards the first exterior, major glass unit surface 9a. The reinforcement profile 8 wall part 8w, such as the entire reinforcement profile, may as illustrated in several of the figures described above be placed at the first plane side S1.

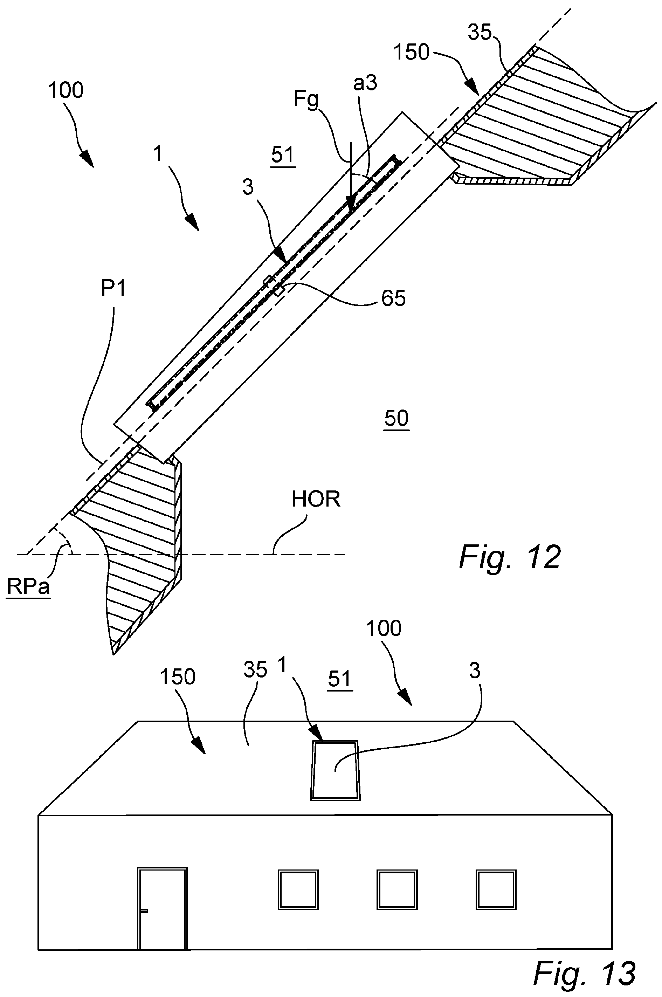

Fig. 12 illustrates schematically a cross section of a part of a roof structure 150 of a building 100 having a roof window 1 according to embodiments of the present disclosure installed therein. The roof structure 150 is arranged with a roof pitch angle RPa. The interior of the frame profiles, such as the reinforcement profile and other parts of the window are omitted from fig. 12 for figure simplicity.

The roof pitch angle RPa relative to horizontal HOR may in embodiments of the present disclosure be above 17° and below 90°. In some embodiments of the present disclosure, the roof pitch angle RPa may be between 17° and 85°, such as between 25° and 75°.

A roof window may be exposed to roughly twice the amount of sun heat than vertical windows.

As can be seen, the first outer major surface 9a of the glass unit 3 faces the interior 50 of the building 100, and the second outer major surface 9b faces away from the interior 50 of the building and towards the exterior 51 of the building.

The first plane P1 comprising the first outer major surface 9a of the glass unit 3may be arranged with an angle that is less than 10°, such as less than 3° relative to the roof pitch. In the embodiment illustrated in fig. 12, the first outer major surface 9a of the glass unit 3 is be arranged with an angle relative to the roof pitch that is substantially 0°, meaning that the plane P1 is substantially parallel with the roof pitch and is hence arranged with the same angle as the roof pitch angle RPa relative to horizontal. This may at least be the case when the frame 2 is placed in a closed position (if the frame 2 is a movable frame), or if the frame is an unmovable, fixed frame.

As can be seen in fig. 12, gravity acts on the glass unit 3 with a force Fg. As the glass unit 3 is arranged inclining relative to horizontal, the force Fg is in a direction that is non-parallel with the first plane P1. For example, the force/gravity force FG may be provided with an angle a3 that is between 5° and 85° such as between 10° and 75° relative to the first plane P1.

Fig. 13 illustrates a building comprising a roof window 1 according to embodiments of the present disclosure, installed in the roof structure 150 of the building. The roof structure is inclining with a roof pitch angle e.g. as described above.

While the present disclosure has been described in detail in connection with only a limited number of embodiments or aspects, it should be readily understood that the present disclosure is not limited to such disclosed embodiments or aspects. Accordingly, the present disclosure is not to be seen as limited by the foregoing description.

## Claims

1. A roof window (1), wherein the roof window comprises a frame (2) supporting a glass unit (3) comprising an first outer major surface (9a) for facing the interior of a building, and a second outer major surface (9b) for facing away from the interior of a building when the window is installed in an aperture of a building,
wherein the frame (2) comprises a plurality of frame profiles (2a-2d) having a longitudinal direction (LDsp) arranged to extend parallel to a side surface (3a) of the glass unit (3), and where the frame profiles (2a-2d) together defines a frame opening (4), wherein one or more of said frame profiles (2a-2d) are hollow and comprises an interior frame profile space (7) enclosed by exterior frame profile walls (5a-5f) defining the exterior surface of the corresponding frame profile (2a-2d),
wherein a frame reinforcement profile (8) is arranged in the interior frame profile space (7), and wherein the thermal conductivity coefficient (*kᵣₚ*) of the material of the reinforcement profile (8) is higher than the thermal conductivity coefficient (*k_{sw}*) of the material of the exterior frame walls (5a-5f), wherein the frame reinforcement profile (8) has a reinforcement profile length extending substantially parallel to the longitudinal direction (LDsp) of the frame profile (2a-2d),
wherein the reinforcement profile (8) comprises a wall part (8w) extending in a direction away from a first region located proximate a first plane (P1) comprising the first outer major surface (9a) of the glass unit (3), and moreover extends in the interior frame profile space (7) in a direction away from a second plane (P2), so that the interior space (7) is split into a first space part (7a) located at a first side of the reinforcement profile, and a second space part (7b) located at a second side of the reinforcement profile,
where the second plane (P2) is perpendicular to the first plane (P1), extends parallel to the longitudinal direction (LDsp) of the frame profile comprising said reinforcement profile (8) in the interior frame profile space (7), and touches a part of an exterior surface (6a1) of a first exterior wall (5a) of the frame profile that faces and is proximate the frame opening (4) below the first outer major surface (9a),
wherein said wall part (8w) extends between
- (i) the first exterior frame profile wall (5a) or the exterior frame profile wall (5f) that faces an overlapping part of the glass unit (3) and the first outer major surface (9a), and
- (ii) another exterior frame profile wall (5c) comprising an exterior surface (6c1) facing away from the frame opening (4) or another exterior frame profile wall (5b) configured to face the interior (50) of the building,
so that a controlled thermal bridge is formed between said exterior frame profile walls (5a, 5f; 5c, 5b).

2. A roof window (1) according to any of the preceding claims, wherein the reinforcement profile (8) wall part (8w) extends towards an opposing corner (A) portion of the frame profile (2a-2d) through the interior space (7).

3. A roof window (1) according to any of the preceding claims, wherein the reinforcement profile (8) extends from a corner (B) proximate the glass unit (3) or a wall (5f) proximate the glass unit (3) comprising an outer wall surface (6f1) facing a part of the outer surface (9a) of the glass unit (3).

4. A roof window (1) according to any of the preceding claims, wherein the frame reinforcement profile (8) wall part (8w) extends into the interior space (7) from a position (POS1) at the first exterior wall (5a), where said position (POS1) is placed between a first proximate corner portion (B) of the frame profile (2a-2d) that is located proximate the first outer major surface (9a) of the glass unit (3), and a distal corner portion (C) of the frame profile (2a-2d) providing a transition from the first exterior wall (5a) to a second exterior wall (5b) of the frame profile, and with a distance (D1) from said first proximate corner portion (B) and said distal corner portion (C).

5. A roof window (1) according to any of the preceding claims, wherein the thermal conductivity coefficient of the material of the reinforcement profile is at least 5 times, such as at least 10 times, such as at least 50 times larger than the thermal conductivity coefficient of the material of the exterior frame walls, and/or wherein the reinforcement profile comprises or is made from metal.

6. A roof window (1) according to any of the preceding claims, wherein the reinforcement profile wall part (8w) extends with an angle (a1) from said first plane (P1) that is less than 75° such as less than 60°, such as less than 45°.

7. A roof window (1) according to any of the preceding claims, wherein substantially the entire reinforcement profile wall part (8w), is placed at the side (S1) of the first plane (P1) that faces away from the first outer major surface (9a).

8. A roof window (1) according to any of the preceding claims, wherein a part of the interior cavity (7), and a part of the frame reinforcement profile (8) extends from a position opposite to the first exterior major surface (9a) of the glass unit (3), and through an edge plane (P3) comprising said side surface (3a) of the glass unit (3).

9. A roof window (1) according to any of the preceding claims, wherein said interior space (7) extends to a position opposite the side surface (3a) of the glass unit (3), where the interior space (7) is enclosed by a plurality of the exterior walls (5c, 5d, 5e).

10. A roof window (1) according to any of the preceding claims, wherein the roof window comprises a cover (20), such as one of a blind, a roller blind or a pleated blind, wherein said cover comprises a covering material (20a) which is configured to be displaced to a covering position located opposite the first exterior major surface (9a) of the glass unit (3) so as to reduce the amount of sunlight entering through the glass unit (3) and into the building, and wherein a space (D3) is provided between the first exterior major surface (9a) and the covering material (20a) when the covering material (20a) is in a covering position.

11. A roof window (1) according to any of the preceding claims, wherein a frame arrangement (30) comprises said frame (2), and wherein the frame arrangement moreover comprises a stationary frame (31) to which the frame (2) is movably connected by means of a hinge arrangement (65).

12. A roof window (1) according to any of the preceding claims, wherein the exterior frame profile walls (5a-5f) are made from or comprises a polymer, such as wherein said polymer comprises PVC, C-PVC Polypropylene (PP), polyethylene terephthalate or Polyurethane.

13. A roof window (1) according to any of the preceding claims, wherein the reinforcement profile (8) is arranged to transfer thermal energy by thermal conduction between opposing corner portions (A, B) of the frame profile, such as diagonally arranged corner portions, and wherein the reinforcement profile (8) is further arranged to substantially not transfer thermal energy by thermal conduction between a distal frame corner portion (C) and the opposing corner portions (A, B).

14. A roof window (1) according to any of the preceding claims, wherein the frame reinforcement profile (8) abuts a first exterior wall (5a, 5f), a component thereof or a corner (B), and/or wherein the frame reinforcement profile (8) comprises a reinforcement profile edge (8b) that abuts another exterior frame profile wall (5b, 5c) or a component thereof, such as proximate or at a corner portion (A).

15. A building (100) comprising one or more roof windows (1) according to any of the preceding claims installed in a roof structure (150) of the building (100) with said first outer major surface (9a) facing the interior (50) of a building, such as at least when the frame (2) is placed in a closed position.

## Patentansprüche

1. Dachfenster (1), wobei das Dachfenster einen Rahmen (2) umfasst, der eine Glaseinheit (3) trägt, die eine erste äußere Hauptfläche (9a), um dem Inneren eines Gebäudes zugewandt zu sein, und eine zweite äußere Hauptfläche (9b) umfasst, um von dem Inneren eines Gebäudes abgewandt zu sein, wenn das Fenster in einer Öffnung eines Gebäudes installiert ist,
wobei der Rahmen (2) eine Vielzahl von Rahmenprofilen (2a-2d) umfasst, die eine Längsrichtung (LDsp) aufweisen, die so angeordnet ist, dass sie parallel zu einer Seitenfläche (3a) der Glaseinheit (3) sich erstreckt, und wobei die Rahmenprofile (2a-2d) zusammen eine Rahmenöffnung (4) definieren, wobei eines oder mehrere der Rahmenprofile (2a-2d) hohl sind und einen inneren Rahmenprofilraum (7) umfassen, der von äußeren Rahmenprofilwänden (5a-5f) umschlossen ist, die die Außenfläche des entsprechenden Rahmenprofils (2a-2d) definieren,
wobei ein Rahmenverstärkungsprofil (8) in dem inneren Rahmenprofilraum (7) angeordnet ist, und wobei der Wärmeleitfähigkeitskoeffizient (*kᵣₚ*) des Materials des Verstärkungsprofils (8) höher ist als der Wärmeleitfähigkeitskoeffizient (*K_{sw}*) des Materials der äußeren Rahmenwände (5a-5f), wobei das Rahmenverstärkungsprofil (8) eine Verstärkungsprofillänge aufweist, die sich im Wesentlichen parallel zur Längsrichtung (LDsp) des Rahmenprofils (2a-2d) erstreckt,
wobei das Verstärkungsprofil (8) einen Wandteil (8w) umfasst, der sich in einer Richtung weg von einem ersten Bereich erstreckt, der sich nahe einer ersten Ebene (P1) befindet, die die erste äußere Hauptfläche (9a) der Glaseinheit (3) umfasst, und außerdem in dem inneren Rahmenprofilraum (7) in einer Richtung weg von einer zweiten Ebene (P2) sich erstreckt, so dass der Innenraum (7) in einen ersten Raumteil (7a), der sich auf einer ersten Seite des Verstärkungsprofils befindet, und einen zweiten Raumteil (7b) geteilt ist, der sich auf einer zweiten Seite des Verstärkungsprofils befindet,
wobei die zweite Ebene (P2) senkrecht zur ersten Ebene (P1) ist, parallel zur Längsrichtung (LDsp) des Rahmenprofils sich erstreckt, das das Verstärkungsprofil (8) in dem inneren Rahmenprofilraum (7) umfasst, und einen Teil einer Außenfläche (6a1) einer ersten Außenwand (5a) des Rahmenprofils berührt, die der Rahmenöffnung (4) unterhalb der ersten äußeren Hauptfläche (9a) zugewandt und nahe ist,
wobei der Wandteil (8w) sich erstreckt zwischen
(i) der ersten äußeren Rahmenprofilwand (5a) oder der äußeren Rahmenprofilwand (5f), die einem überlappenden Teil der Glaseinheit (3) und der ersten äußeren Hauptfläche (9a) zugewandt ist, und
(ii) einer anderen äußeren Rahmenprofilwand (5c), die eine Außenfläche (6c1) umfasst, die von der Rahmenöffnung (4) abgewandt ist, oder einer anderen äußeren Rahmenprofilwand (5b), die konfiguriert ist, um dem Inneren (50) des Gebäudes zugewandt zu sein,
so dass eine gesteuerte Wärmebrücke zwischen den äußeren Rahmenprofilwänden (5a, 5f; 5c, 5b) gebildet wird.

2. Dachfenster (1) nach einem der vorhergehenden Ansprüche, wobei der Wandteil (8w) des Verstärkungsprofils (8) in Richtung eines gegenüberliegenden Eckabschnitts (A) des Rahmenprofils (2a-2d) durch den Innenraum (7) sich erstreckt.

3. Dachfenster (1) nach einem der vorhergehenden Ansprüche, wobei das Verstärkungsprofil (8) von einer Ecke (B) nahe der Glaseinheit (3) oder einer Wand (5f) nahe der Glaseinheit (3) sich erstreckt, die eine äußere Wandfläche (6f1) umfasst, die einem Teil der äußeren Oberfläche (9a) der Glaseinheit (3) zugewandt ist.

4. Dachfenster (1) nach einem der vorhergehenden Ansprüche, wobei der Wandteil (8w) des Rahmenverstärkungsprofils (8) von einer Position (POS1) an der ersten Außenwand (5a) in den Innenraum (7) sich erstreckt, wobei die Position (POS1) zwischen einem ersten nahen Eckabschnitt (B) des Rahmenprofils (2a-2d), der sich nahe der ersten äußeren Hauptfläche (9a) der Glaseinheit (3) befindet, und einem distalen Eckabschnitt (C) des Rahmenprofils (2a-2d) platziert ist, der einen Übergang von der ersten Außenwand (5a) zu einer zweiten Außenwand (5b) des Rahmenprofils bereitstellt, und mit einem Abstand (D1) von dem ersten nahen Eckabschnitt (B) und dem distalen Eckabschnitt (C).

5. Dachfenster (1) nach einem der vorhergehenden Ansprüche, wobei der Wärmeleitfähigkeitskoeffizient des Materials des Verstärkungsprofils wenigstens 5-mal, wie beispielsweise wenigstens 10-mal, wie beispielsweise wenigstens 50-mal größer ist als der Wärmeleitfähigkeitskoeffizient des Materials der äußeren Rahmenwände, und/oder wobei das Verstärkungsprofil Metall umfasst oder daraus hergestellt ist.

6. Dachfenster (1) nach einem der vorhergehenden Ansprüche, wobei der Wandteil (8w) des Verstärkungsprofils mit einem Winkel (a1) von der ersten Ebene (P1) sich erstreckt, der kleiner als 75°, wie beispielsweise kleiner als 60°, wie beispielsweise kleiner als 45° ist.

7. Dachfenster (1) nach einem der vorhergehenden Ansprüche, wobei im Wesentlichen der gesamte Wandteil (8w) des Verstärkungsprofils auf der Seite (S1) der ersten Ebene (P1) platziert ist, die von der ersten äußeren Hauptfläche (9a) abgewandt ist.

8. Dachfenster (1) nach einem der vorhergehenden Ansprüche, wobei ein Teil des Innenhohlraums (7) und ein Teil des Rahmenverstärkungsprofils (8) von einer Position gegenüber der ersten äußeren Hauptfläche (9a) der Glaseinheit (3) und durch eine Kantenebene (P3) sich erstreckt, die die Seitenfläche (3a) der Glaseinheit (3) umfasst.

9. Dachfenster (1) nach einem der vorhergehenden Ansprüche, wobei der Innenraum (7) zu einer Position gegenüber der Seitenfläche (3a) der Glaseinheit (3) sich erstreckt, wobei der Innenraum (7) von einer Vielzahl der Außenwände (5c, 5d, 5e) umschlossen ist.

10. Dachfenster (1) nach einem der vorhergehenden Ansprüche, wobei das Dachfenster eine Abdeckung (20) umfasst, wie beispielsweise eine Jalousie, ein Rollo oder ein Plissee, wobei die Abdeckung ein Abdeckmaterial (20a) umfasst, das konfiguriert ist, um in eine Abdeckposition verschoben zu werden, die sich gegenüber der ersten äußeren Hauptfläche (9a) der Glaseinheit (3) befindet, um so die Menge an Sonnenlicht zu reduzieren, die durch die Glaseinheit (3) und in das Gebäude eintritt, und wobei ein Raum (D3) zwischen der ersten äußeren Hauptfläche (9a) und dem Abdeckmaterial (20a) bereitgestellt ist, wenn sich das Abdeckmaterial (20a) in einer Abdeckposition befindet.

11. Dachfenster (1) nach einem der vorhergehenden Ansprüche, wobei eine Rahmenanordnung (30) den Rahmen (2) umfasst, und wobei die Rahmenanordnung außerdem einen stationären Rahmen (31) umfasst, mit dem der Rahmen (2) mittels einer Scharnieranordnung (65) beweglich verbunden ist.

12. Dachfenster (1) nach einem der vorhergehenden Ansprüche, wobei die äußeren Rahmenprofilwände (5a-5f) aus einem Polymer hergestellt sind oder dieses umfassen, wie beispielsweise wobei das Polymer PVC, C-PVC, Polypropylen (PP), Polyethylenterephthalat oder Polyurethan umfasst.

13. Dachfenster (1) nach einem der vorhergehenden Ansprüche, wobei das Verstärkungsprofil (8) angeordnet ist, um thermische Energie durch Wärmeleitung zwischen gegenüberliegenden Eckabschnitten (A, B) des Rahmenprofils, wie beispielsweise diagonal angeordneten Eckabschnitten, zu übertragen, und wobei das Verstärkungsprofil (8) ferner angeordnet ist, um im Wesentlichen keine thermische Energie durch Wärmeleitung zwischen einem distalen Rahmeneckabschnitt (C) und den gegenüberliegenden Eckabschnitten (A, B) zu übertragen.

14. Dachfenster (1) nach einem der vorhergehenden Ansprüche, wobei das Rahmenverstärkungsprofil (8) an eine erste Außenwand (5a, 5f), ein Bauteil davon oder eine Ecke (B) anstößt, und/oder wobei das Rahmenverstärkungsprofil (8) eine Verstärkungsprofilkante (8b) umfasst, die an eine andere äußere Rahmenprofilwand (5b, 5c) oder ein Bauteil davon anstößt, wie beispielsweise nahe oder an einem Eckabschnitt (A).

15. Gebäude (100), umfassend ein oder mehrere Dachfenster (1) nach einem der vorhergehenden Ansprüche, die in einer Dachkonstruktion (150) des Gebäudes (100) installiert sind, wobei die erste äußere Hauptfläche (9a) dem Inneren (50) eines Gebäudes zugewandt ist, wie beispielsweise wenigstens, wenn der Rahmen (2) in einer geschlossenen Position platziert ist.

## Revendications

1. Fenêtre de toit (1), la fenêtre de toit comprenant un cadre (2) supportant une unité de verre (3) comprenant une première surface principale extérieure (9a) orientée vers l'intérieur d'un bâtiment, et une seconde surface principale extérieure (9b) orientée à l'opposé de l'intérieur d'un bâtiment lorsque la fenêtre est installée dans une ouverture d'un bâtiment,
dans laquelle le cadre (2) comprend une pluralité de profilés de cadre (2a-2d) présentant une direction longitudinale (LDsp) agencée pour s'étendre parallèlement à une surface latérale (3a) de l'unité de verre (3), et où les profilés de cadre (2a-2d) définissent ensemble une ouverture de cadre (4), dans laquelle un ou plusieurs desdits profilés de cadre (2a-2d) sont creux et comprennent un espace de profilé de cadre intérieur (7) délimité par des parois de profilé de cadre extérieures (5a-5f) définissant la surface extérieure du profilé de cadre correspondant (2a-2d),
dans laquelle un profilé de renforcement de cadre (8) est disposé dans l'espace intérieur du profilé de cadre (7), et dans laquelle le coefficient de conductivité thermique (*kᵣₚ*) du matériau du profilé de renforcement (8) est supérieur au coefficient de conductivité thermique (*k_{sw}*) du matériau des parois extérieures du cadre (5a-5f), dans laquelle le profilé de renforcement de cadre (8) présente une longueur de profilé de renforcement s'étendant sensiblement parallèlement à la direction longitudinale (LDsp) du profilé de cadre (2a-2d),
dans laquelle le profilé de renforcement (8) comprend une partie de paroi (8w) s'étendant dans une direction s'éloignant d'une première région située à proximité d'un premier plan (P1) comprenant la première surface principale extérieure (9a) de l'unité de verre (3), et s'étend en outre dans l'espace du profilé de cadre intérieur (7) dans une direction s'éloignant d'un second plan (P2), de sorte que l'espace intérieur (7) est divisé en une première partie d'espace (7a) située d'un premier côté du profilé de renforcement, et une seconde partie d'espace (7b) située d'un second côté du profilé de renforcement,
où le deuxième plan (P2) est perpendiculaire au premier plan (P1), s'étend parallèlement à la direction longitudinale (LDsp) du profilé de cadre comprenant ledit profilé de renfort (8) dans l'espace intérieur du profilé de cadre (7), et touche une partie d'une surface extérieure (6a1) d'une première paroi extérieure (5a) du profilé de cadre qui fait face et est proche de l'ouverture du cadre (4) sous la première surface principale extérieure (9a),
dans laquelle ladite partie de paroi (8w) s'étend entre
- (i) la première paroi extérieure du profilé de cadre (5a) ou la paroi extérieure du profilé de cadre (5f) qui fait face à une partie de chevauchement de l'unité de verre (3) et la première surface principale extérieure (9a), et
- (ii) une autre paroi extérieure du profilé de cadre (5c) comprenant une surface extérieure (6c1) opposée à l'ouverture du cadre (4) ou une autre paroi extérieure du profilé de cadre (5b) configurée pour faire face à l'intérieur (50) du bâtiment, de sorte qu'un pont thermique contrôlé soit formé entre lesdites parois extérieures du profilé de cadre (5a, 5f ; 5c, 5b).

2. Fenêtre de toit (1) selon l'une quelconque des revendications précédentes, dans laquelle la partie de paroi (8w) du profilé de renforcement (8) s'étend vers une partie d'angle opposée (A) du profilé de cadre (2a-2d) à travers l'espace intérieur (7).

3. Fenêtre de toit (1) selon l'une quelconque des revendications précédentes, dans laquelle le profilé de renfort (8) s'étend à partir d'un coin (B) à proximité de l'unité de verre (3) ou d'une paroi (5f) à proximité de l'unité de verre (3) comprenant une surface de paroi extérieure (6f1) faisant face à une partie de la surface extérieure (9a) de l'unité de verre (3).

4. Fenêtre de toit (1) selon l'une quelconque des revendications précédentes, dans laquelle la partie de paroi (8w) du profilé de renforcement de cadre (8) s'étend dans l'espace intérieur (7) à partir d'une position (POS1) au niveau de la première paroi extérieure (5a), où ladite position (POS1) est placée entre une première partie d'angle proximale (B) du profilé de cadre (2a-2d) qui est située à proximité de la première surface principale extérieure (9a) de l'unité de verre (3), et une partie d'angle distale (C) du profilé de cadre (2a-2d) fournissant une transition de la première paroi extérieure (5a) à une seconde paroi extérieure (5b) du profilé de cadre, et avec une distance (D1) de ladite première partie d'angle proximale (B) et de ladite partie d'angle distale (C).

5. Fenêtre de toit (1) selon l'une quelconque des revendications précédentes, dans laquelle le coefficient de conductivité thermique du matériau du profilé de renforcement est au moins 5 fois, par exemple au moins 10 fois, par exemple au moins 50 fois plus grand que le coefficient de conductivité thermique du matériau des parois extérieures du cadre, et/ou dans laquelle le profilé de renforcement comprend ou est fabriqué à partir de métal.

6. Fenêtre de toit (1) selon l'une quelconque des revendications précédentes, dans laquelle la partie de paroi du profilé de renforcement (8w) s'étend avec un angle (a1) par rapport audit premier plan (P1) qui est inférieur à 75°, par exemple inférieur à 60°, par exemple inférieur à 45°.

7. Fenêtre de toit (1) selon l'une quelconque des revendications précédentes, dans laquelle sensiblement toute la partie de paroi du profilé de renforcement (8w) est placée sur le côté (S1) du premier plan (P1) qui est opposé à la première surface principale extérieure (9a).

8. Fenêtre de toit (1) selon l'une quelconque des revendications précédentes, dans laquelle une partie de la cavité intérieure (7) et une partie du profilé de renforcement de cadre (8) s'étendent à partir d'une position opposée à la première surface principale extérieure (9a) de l'unité de verre (3) et à travers un plan de bord (P3) comprenant ladite surface latérale (3a) de l'unité de verre (3).

9. Fenêtre de toit (1) selon l'une quelconque des revendications précédentes, dans laquelle ledit espace intérieur (7) s'étend jusqu'à une position opposée à la surface latérale (3a) de l'unité de verre (3), où l'espace intérieur (7) est entouré par une pluralité de parois extérieures (5c, 5d, 5e).

10. Fenêtre de toit (1) selon l'une quelconque des revendications précédentes, dans laquelle la fenêtre de toit comprend une couverture (20), telle qu'un store, un store à enrouleur ou un store plissé, dans laquelle ladite couverture comprend un matériau de couverture (20a) qui est configuré pour être déplacé vers une position de couverture située à l'opposé de la première surface principale extérieure (9a) de l'unité de verre (3) de manière à réduire la quantité de lumière solaire entrant à travers l'unité de verre (3) et dans le bâtiment, et dans laquelle un espace (D3) est prévu entre la première surface principale extérieure (9a) et le matériau de couverture (20a) lorsque le matériau de couverture (20a) est dans une position de couverture.

11. Fenêtre de toit (1) selon l'une quelconque des revendications précédentes, dans laquelle un agencement de cadre (30) comprend ledit cadre (2), et dans laquelle l'agencement de cadre comprend en outre un cadre fixe (31) auquel le cadre (2) est relié de manière mobile au moyen d'un agencement de charnière (65).

12. Fenêtre de toit (1) selon l'une quelconque des revendications précédentes, dans laquelle les parois extérieures du profilé du cadre (5a-5f) sont constituées de ou comprennent un polymère, tel que dans laquelle ledit polymère comprend du PVC, du C-PVC, du polypropylène (PP), du polyéthylène téréphtalate ou du polyuréthane.

13. Fenêtre de toit (1) selon l'une quelconque des revendications précédentes, dans laquelle le profilé de renforcement (8) est agencé pour transférer l'énergie thermique par conduction thermique entre des parties d'angle opposées (A, B) du profilé de cadre, telles que des parties d'angle disposées en diagonale, et dans laquelle le profilé de renforcement (8) est en outre agencé pour ne pratiquement pas transférer l'énergie thermique par conduction thermique entre une partie d'angle distale du cadre (C) et les parties d'angle opposées (A, B).

14. Fenêtre de toit (1) selon l'une quelconque des revendications précédentes, dans laquelle le profilé de renforcement de cadre (8) vient en butée contre une première paroi extérieure (5a, 5f), un composant de celle-ci ou un coin (B), et/ou dans laquelle le profilé de renforcement de cadre (8) comprend un bord de profilé de renforcement (8b) qui vient en butée contre une autre paroi extérieure de profilé de cadre (5b, 5c) ou un composant de celle-ci, par exemple à proximité ou au niveau d'une partie d'angle (A).

15. Bâtiment (100) comprenant une ou plusieurs fenêtres de toit (1) selon l'une quelconque des revendications précédentes installées dans une structure de toit (150) du bâtiment (100) avec ladite première surface principale extérieure (9a) faisant face à l'intérieur (50) d'un bâtiment, au moins lorsque le cadre (2) est placé dans une position fermée.
